# FASCICULE DE BREVET EUROPEEN

(11) **EP 3 441 173 B1**
(45) Date de publication et mention de la délivrance du brevet: **16.12.2020**
(21) Numéro de dépôt: 18187657.4
(22) Date de dépôt: 07.08.2018
(51) Int. Cl.: B23K 9/00, B23K 9/20

(54) **OUTIL DE SOUDAGE DE GOUJON SOUS EAU, ET PROCÉDÉ DE MISE EN OEUVRE D'UN TEL OUTIL**
SCHWEISSWERKZEUG FÜR BOLZEN UNTER WASSER, UND VERFAHREN ZUM VERWENDUNG SOLCHES WERKZEUGES
TOOL FOR WELDING A STUD UNDER WATER, AND PROCESS OF USING SUCH TOOL

(30) Priorité: 10.08.2017 FR 1757633
(43) Date de publication de la demande: 13.02.2019
(73) Titulaire: Onet Technologies CN, 13009 Marseille (FR)
(72) Inventeur: GINER, Loïc, 30150 Montfaucon (FR); GUIZARD, Olivier, 13008 Marseille (FR)
(74) Mandataire: Cabinet Beau de Loménie

(56) Documents cités:
- FR-A1- 2 506 644
- FR-A1- 2 837 117
- US-A- 3 989 920
- US-A- 5 981 896

## Description

La présente invention concerne un outil de soudage sous eau de l'extrémité de goujon sur une surface de pièce métallique à souder selon l'objet de la revendication 1 et un procédé de mise en œuvre d'un tel outil conformément à l'objet de la revendication 11.

Plus particulièrement encore, la présente invention concerne un outil de soudage sous eau permettant de souder à pleine section un goujon sur une surface métallique notamment dans des piscines de centrales nucléaires, plus particulièrement pour remplacer sous eau des goujons sur des portes de batardeaux de piscine de centrales nucléaires.

Le dispositif de soudage selon la présente invention est également adaptable pour d'autres types d'interventions de soudage sous eau dans différents secteurs industriels autre que le nucléaire comme l'industrie pétrochimique, les technologies de construction navale et installation off-shore exemple.

Le dispositif de soudage selon la présente invention comprend un dispositif de soudage du type pistolet automatique, un outillage de positionnement, un coffret de commande assurant la commande du pistolet automatique depuis la surface.

Lors du soudage du goujon par fusion et forgeage, un arc est brièvement créé entre l'extrémité du goujon et la pièce à souder; il y a fusion des deux éléments à souder et ils sont ensuite assemblés. L'une des caractéristiques du soudage des goujons est le temps d'arc très court (environ de 0,5 ms à 3 000 ms) ainsi que les vitesses de chauffage et de refroidissement élevées qui s'y rapportent. Normalement, la valeur du diamètre de goujon peut atteindre 10 mm pour le soudage à l'arc avec amorçage par contact et peut atteindre 25 mm pour le soudage à l'arc par fusion et forgeage. Ce procédé de soudage des goujons est utilisé, entre autres, pour la construction des ouvrages d'art, les constructions métalliques, la fabrication des murs de façades, la fabrication des véhicules, la conception des équipements, la fabrication des chaudières et la fabrication des appareils électroménagers.

Les principaux avantages de ce procédé de soudage sont la productivité et la facilité de mise en œuvre. En effet, le cycle de soudage de courte de durée (≈1s) permet une cadence élevée de soudage de goujon tout en garantissant une tenue mécanique de l'assemblage soudé puisque le goujon est soudé à pleine section.

L'inconvénient principal de ce procédé réside dans la difficulté de réaliser des contrôles non destructifs interprétables sur les soudures permettant ainsi d'apprécier la qualité de la soudure en production.

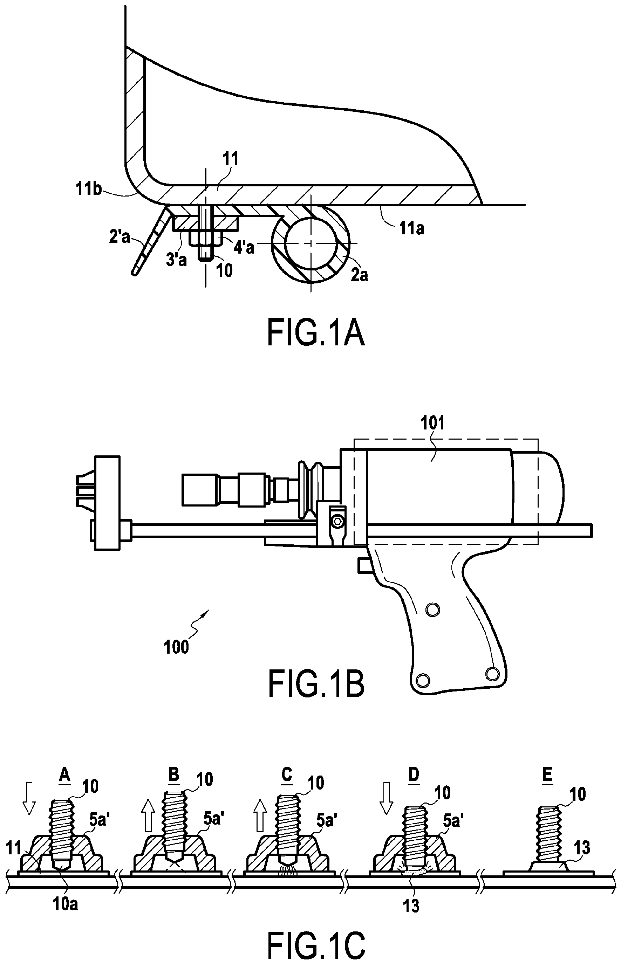

La Figure 1C illustre la séquence des différentes phases d'un soudage à l'arc de goujon par fusion et forgeage dans le cas d'utilisation d'une bague en céramique 5a'. Le soudage à l'arc des goujons par fusion et forgeage peut être mis en œuvre mécaniquement ou automatiquement, en utilisant un pistolet ou des têtes de soudage. Le goujon est inséré dans son support et, après positionnement éventuel d'une bague en céramique, il est mis en contact (A) avec la pièce. Au début du processus de soudage, le goujon est relevé (B) par un mécanisme et, en général, un arc pilote puis l'arc principal sont établis (C) entre l'extrémité 10a du goujon et la pièce. Cela provoque la fusion de l'extrémité du goujon et de la pièce (D). Lorsque le temps de soudage est écoulé, le goujon est plongé dans le bain de fusion 13 avec une force de valeur faible (< 100 N), et le courant est coupé. Ensuite, la bague en céramique 5a' est éliminée.

De manière générale, la présence d'eau est incompatible avec la réalisation d'une opération de soudage. Pour réussir une opération de soudage en milieu aquatique, des parades doivent être mises en œuvre pour protéger le bain de fusion de l'environnement extérieur et ainsi pouvoir obtenir des soudures de qualité.

L'application du soudage de goujon en pleine eau a fait l'objet de plusieurs brevets datant des années 70 et 80 dans le cadre d'application offshore. La technologie la plus répandue consiste à utiliser un pistolet de soudage à l'arc de goujon modifié avec une cloche recouvrant les pièces à souder constituant une chambre dans laquelle on injecte un gaz inerte ou non pour assurer l'évacuation de l'eau et la protection gazeuse du cordon de soudure pendant l'opération de soudage.

Les dispositifs de soudage de goujon sous eau présentés dans ces brevets antérieurs présentent un certain nombre d'inconvénient empêchant de les employer valablement dans certaines applications

Dans US 3989920, US 4182949, US 4681998, GB 2042391, JP.619980, JPS 62286678, JPS 62286679, JPS 5820321, JPS 62227579, JPS 63188475, JP 2007175754 et FR 2506644 on met en œuvre des cloches d'inertage fixes lesquelles ne permettent pas un séchage efficace des pièces à souder (pièce support + goujon). En effet, le goujon directement en contact avec la tôle à souder peut comporter de l'eau résiduelle interstitielle persistant sur l'extrémité du goujon et donc entre celle-ci et la pièce support portant préjudice à la qualité de la soudure finale.

Dans certains brevets tels que EP0208800B1, US 4681998A et JPS60221180 on utilise un agent générateur de gaz sous forme de pastilles constituées de bicarbonate de Sodium NaHCO3 et de poudre d'aluminium qui se décomposent au contact de l'arc électrique et libèrent du gaz inerte. Mais, cette décomposition engendre une pollution de l'eau non acceptable pour certaines applications notamment dans les piscines de centrales nucléaires.

En particulier, dans l'état de la technique FR 2506644, on utilise une bague de retenue en céramique positionnée en extrémité de goujon permettant ainsi la protection du bain de fusion et son maintien (par cloisonnement) jusqu'à sa solidification. En effet, le rôle principal de cette bague céramique est de protéger le bain de fusion et le contenir jusqu'à sa solidification afin d'éviter son expulsion. Cette bague est ensuite détruite manuellement entrainant une pollution de l'eau dans laquelle est réalisée l'opération de soudage. Or, la pollution induite par la casse de cette bague céramique après soudage est incompatible avec une mise en œuvre en piscine de centrale nucléaire. Les contraintes imposées par les conditions en centrale nucléaire ne permettent donc pas l'utilisation d'une telle méthode.

Dans certains brevets tel que US 3989920A, on réalise une fixation du dispositif de soudage par aimant. Mais, les systèmes de fixation par aimant ne sont pas utilisables sur des aciers inoxydables austénitiques du fait de leurs caractères amagnétiques.

Dans JP 619980 et JPS63188475A, on réalise une fixation du dispositif de soudage par ventouse. Mais, les systèmes de fixation par ventouse sont peu adaptés aux opérations de soudage en position corniche (lorsque le pistolet est à l'horizontale). Le poids du dispositif de soudage auquel s'ajoute le phénomène de gravité crée des désalignements préjudiciables à la qualité de la soudure et à sa répétabilité. De plus, les systèmes de fixation par ventouse acceptent relativement mal les défauts de surface ou d'alignements des tôles engendrant des risques de chute du dispositif de soudage et son endommagement.

Le but de l'invention est donc de créer un dispositif de soudage de goujon sous eau amélioré qui ne présente pas les inconvénients cités ci-dessus et soit immergeable et manipulable par un scaphandrier permettant de souder sous eau des goujons sur des supports métalliques. Pour ce faire, le dispositif de soudage doit être capable de rassembler les conditions nécessaires et suffisantes à la réalisation d'une opération de soudage sous eau afin d'obtenir des soudures de qualité et résistantes mécaniquement.

Ainsi, le dispositif doit répondre aux critères suivants :
Être immergeable,
Être manipulable par un scaphandrier,
Pouvoir souder des goujons de différents diamètres et de différentes nuances,
Être utilisable sur différents types de supports métalliques (liner, porte de batardeau, support...),
Permettre de réaliser des soudures résistantes mécaniquement,
Pouvoir souder dans différentes positions de soudage, et

Surtout ne pas générer de déchets.

Pour répondre à tous ces critères, on a développé selon la présente invention, un outil de soudage tel que défini dans la revendication 1, comprenant un caisson étanche équipé d'une cloche d'inertage mobile permettant la création d'une atmosphère gazeuse autour du bain de fusion pendant l'opération de soudage à l'arc par fusion et forgeage en supprimant la bague céramique employée dans le procédé conventionnel.

L'outil de soudage de goujon proposé selon la présente invention se caractérise particulièrement par la mise en œuvre d'une cloche d'inertage mobile comprenant des moyens de séchage complet des pièces à souder (tôle + goujon) avant soudage et apte à créer une atmosphère gazeuse nécessaire à l'opération de soudage.

Pour ce faire, la cloche est mobile en translation avec une position initiale de pré-accostage plaçant la cloche en appui contre la surface de la pièce à souder avec l'extrémité du goujon qui est en retrait par rapport à l'extrémité de la cloche et de la surface de la pièce à souder et des moyens de sortie du gaz orienté sensiblement radialement directement sur l'extrémité du goujon et la zone à souder de la surface de la pièce à souder. Cette configuration permet au gaz de sécher simultanément l'extrémité du goujon et la zone à souder avant le soudage garantissant une qualité de soudure optimale.

Le dispositif est également muni d'un circuit de gaz orienté plus axialement dont le rôle principal est l'évacuation de l'eau contenu dans la cloche et la création d'une atmosphère gazeuse au niveau de la zone à souder pendant le soudage.

Afin de permettre l'échappement de ces gaz axiaux et radiaux, l'extrémité de la cloche a été dentelée.

L'ensemble de ces dispositions permet au procédé de soudage selon l'invention de s'affranchir de l'utilisation de la bague en céramique, le maintien du bain de fusion et sa protection vis-à-vis de l'oxydation étant assuré par la présence de gaz en surpression.

Plus précisément la présente invention fournit un outil de soudage sous eau de l'extrémité de goujon sur une surface de pièce métallique à souder comprenant un dispositif de soudage de goujon comprenant :
a) un caisson formant une enceinte renfermant :
   - un support de goujon apte à supporter le goujon et le maintenir dans une direction longitudinale axiale (XX') au sein d'une première chambre interne du caisson, le dit support de goujon étant monté apte à coulisser au sein de la première chambre interne en première translation relative par rapport au caisson en aller et retour dans la dite direction longitudinale (XX') lorsqu'on commande une opération de soudage dudit goujon, de préférence en coopérant avec un premier ressort,
   - des moyens de déclenchement d'un arc électrique de soudage entre un goujon supporté par ledit support de goujon et la surface de la pièce à souder, et
   - des moyens motorisés aptes à déplacer le support de goujon en dite première translation relative en aller et retour dans la dite direction longitudinale (XX') lorsqu'on commande une opération de soudage dudit goujon contre la surface d'une pièce à souder, et
b) une cloche montée co-axialement à l'avant dudit caisson, la dite cloche comprenant un corps principal de cloche creux délimitant une deuxième chambre interne apte à recevoir le dit goujon sur le dit support de goujon et un gaz apte à chasser un volume d'eau limité pouvant être contenu dans la deuxième chambre interne, c) au moins un premier circuit de distribution de gaz par lequel un premier flux de gaz peut être envoyé dans la dite cloche pour chasser l'eau au niveau de la zone de surface de la pièce à souder pendant le soudage, de préférence un gaz, caractérisé en ce que le dit corps principal de cloche comprenant une paroi transversale avant comprenant un orifice centrale circulaire coaxial bordé par une couronne crénelée externe coaxiale apte à buter contre la surface de la pièce à souder,
   et en ce que l'outil comprend :
   (1) une dite cloche montée apte à être déplacée en deuxième translation relative par rapport au dit caisson co-axialement à l'avant dudit caisson entre :
      (1a) une position de pré-accostage de l'outil de soudage dans laquelle lorsque la dit couronne crénelée est en contact contre la surface de la pièce à souder, la cloche étant le plus éloigné du caisson et l'extrémité avant dudit goujon supporté par le dit support de goujon se trouvant en retrait vers l'arrière par rapport à l'extrémité avant de la dite couronne crénelée, et
      (1b) une position d'accostage de l'outil de soudage dans laquelle la cloche est le plus proche du caisson, la dite couronne crénelée et l'extrémité avant dudit goujon supporté par le dit support de goujon se trouvant en butée contre ladite surface de la pièce à souder, et
   (2) deux circuits de distribution du gaz avec :
      (2a) un premier circuit par lequel un premier flux de gaz peut être envoyé dans ladite première chambre interne, de préférence de l'avant du caisson, en direction du dit orifice central de ladite deuxième chambre interne de la dite cloche avec laquelle elle communique, ledit premier flux pouvant arriver au niveau du dit orifice central parallèlement ou selon une première inclinaison d'un angle α1 par rapport à la direction longitudinale axiale (XX') de façon à évacuer toute eau contenue dans lesdites première chambre interne et deuxième chambre interne en dite position de pré-accostage et dite position d'accostage, et
      (2b) un deuxième circuit par lequel un deuxième flux de gaz peut être envoyé en direction de l'extrémité avant dudit goujon en dite position initiale de pré-accostage de l'outil de soudage de façon à en chasser toute trace d'humidité, ledit deuxième flux pouvant arriver au niveau de ladite extrémité avant du goujon radialement ou selon une deuxième inclinaison d'un angle α2 par rapport à la direction longitudinale axiale (XX') plus importante que l'angle α1 de la dite première inclinaison.

Les caractéristiques combinées
- d'une part, de deuxième circuit par lequel un deuxième flux de gaz peut être envoyé en direction de l'extrémité dudit goujon en dite position initiale de pré-accostage de l'outil de soudage et
- d'autre part, de dite deuxième translation relative de la cloche et du caisson avec
- en position initiale de pré-accostage de l'outil de soudage, la dite couronne crénelée qui se trouve en simple contact contre la surface de la pièce à souder et le dit goujon qui se trouve en retrait vers l'arrière par rapport à ladite surface de la pièce à souder,
- permettent que le deuxième flux de gaz dans une direction inclinée (α2) ou dans une direction radiale réalise le séchage complet de l'extrémité avant du goujon évitant que des traces d'humidité ne soit conservée entre l'extrémité du goujon et la surface à souder en dite position d'accostage et de soudage.

On entend ici par :
- « avant » et « arrière », qu'on se réfère au côté le plus proche (pour « avant ») et respectivement le plus éloigné (pour « arrière ») de la surface de la pièce à souder dans la direction longitudinale XX', à
   - la dite paroi transversale avant s'étend dans un plan perpendiculaire à la direction axiale longitudinale XX ;
- « co-axialement » se réfère à la même direction longitudinale axiale Xx' pour le goujon et le support de goujon assemblés, la cloche, orifice central et couronne, les première et deuxième chambres internes, lesdites première et deuxième translations,
- la dite couronne crénelée externe co-axiale s'étend depuis la dite paroi transversale avant vers l'avant par rapport à la dite paroi avant.

On comprend que :
- la dite paroi transversale avant de la cloche délimite la dite deuxième chambre interne, et
- la dite première chambre interne dudit caisson est formée par une partie avant creuse dudit caisson contenant le dit support de goujon et la dite première chambre interne dudit caisson communique avec la dite deuxième chambre interne de la cloche ;
- le bord d'appui de la couronne contre la dite surface à souder est crénelée sous forme de créneaux de manière à permettre -sous l'effet des flux de gaz injecté dans la cloche - d'évacuer dans l'espace entre les créneaux, l'eau qu'elle contient lorsque la couronne est en appui contre la surface.

Les aller et retour en première translation relative en aller et retour dans la dite direction longitudinale dudit goujon lorsqu'on commande une opération de soudage dudit goujon contre la surface d'une pièce à souder consiste :
(1) à l'aller : à venir buter en contact contre la dite surface de la pièce à souder dans le sens de l'arrière vers l'avant du dispositif de soudage voire en plongeant dans le bain de soudure le cas échéant, et
(2) au retour : à s'en dégager en sens inverse de l'avant vers l'arrière pour permettre l'établissement de l'arc électrique créant le bain de fusion.

Le volume des dites première et deuxième chambres internes incluant celui de la couronne crénelée détermine le volume d'eau à évacuer pour le soudage et donc la pression du gaz laquelle est cependant aussi commandée par la profondeur d'immersion. En pratique le volume des dites première et deuxième chambres internes sera de 65000 à 90000 mm3.

En revanche il est avantageux dans certaines applications de limiter le diamètre de la couronne crénelée en butée sur la surface à souder ce qui permet :
- d'une part de se rapprocher d'un bord de la dite surface de la pièce pour souder un goujon à proximité du dit bord de la dite surface de la pièce, et
- d'autre part, en position initiale de pré-accostage, de faciliter le séchage de l'extrémité du goujon et de la zone à souder positionnée dans l'axe de la couronne été du dit orifice central.

En pratique Le volume interne de la dite couronne sera de 3000 à 4000 mm3.

Plus particulièrement, la dite couronne crénelée présente un diamètre inférieur à celui de la paroi transversale avant de la cloche au-delà de laquelle ladite couronne s'étend (e) dans la dite direction longitudinale axiale (XX') lequel diamètre de la dite couronne est de préférence d'au moins 3 fois le diamètre dudit goujon et de pas plus de 1/3, de préférence pas plus de 1/10, du diamètre de la cloche au niveau de la dite paroi transversale avant et la longueur (e) de la couronne est pas plus 1/3, de préférence de pas plus de 1/5 du diamètre de ladite couronne.

Le diamètre de l'extrémité avant de la dite deuxième chambre interne à l'extrémité avant de la cloche correspond au diamètre de l'orifice central au niveau de la paroi transversale avant de la cloche et de celui de ladite couronne.

En pratique, le diamètre de ladite couronne présente une valeur de pas plus de 3 fois le diamètre du goujon, plus particulièrement de 2 à 3 fois le diamètre du goujon, notamment un diamètre de 10 à 20 mm, notamment 16 mm et la couronne présente une longueur e de 1 à 5mm pour un diamètre de paroi transversale avant de la cloche de 40 à 50mm. Ces dimensions requirent une pression de gaz de 1 à 2 bars pour un soudage à une profondeur d'eau de 5 à 10m.

En pratique, l'épaisseur e de la couronne dans la direction longitudinale détermine l'épaisseur de l'espace entre la surface à souder et la dite paroi transversale avant pleine de la cloche, espace par lequel l'eau est évacué à travers les créneaux de la dite couronne. En pratique, cette épaisseur e peut être réduite à une valeur de 1 à 5 mm, notamment 2 mm pour un orifice central de 10 à 20mm, notamment 16 mm, compte tenu des créneaux de la dite couronne 1 à 2mm de largeur par lesquels s'évacue l'eau.

Plus particulièrement encore les inclinaisons des dits premier et deuxième flux de gaz sont α1 est de 5 à 30° et α2 est de 45 à 60°.

Plus particulièrement, au moins un capteur, de préférence apte à coopérer avec au moins une butée mécanique, permet de contrôler une distance minimale (d3) de la cloche par rapport au caisson en dite deuxième translation relative en dite position d'accostage de l'outil de soudage dans laquelle la cloche est le plus proche du caisson, la dit couronne crénelée et l'extrémité avant dudit goujon supporté par le dit support de goujon se trouvant en butée contre ladite surface de la pièce à souder.

Dans un mode préféré de réalisation, l'outil de soudage selon l'invention comprend :
- un dit support de goujon apte à coulisser au sein de la première chambre en dite première translation relative en coopérant avec un dit premier ressort tel que :
   (a1) ledit premier ressort est en position de détente lorsque le dit goujon est en dite position de pré-accostage ou en position de désaccostage dans laquelle la dite cloche n'est pas encore ou plus en contact avec la surface à souder, et
   (b1) ledit premier ressort est en position partiellement comprimée lorsque ledit goujon est en dite position d'accostage en butée contre la dite surface de la pièce à souder, et
- un dit corps principal de la dite cloche qui est monté sur des axes de guidage guidant ladite deuxième translation relative du caisson par rapport à la cloche, les dits axes de guidage étant solidaires de la partie avant du dit caisson délimitant la dite première chambre interne et le dit corps principal de la cloche est apte à coopérer avec un deuxième ressort lors d'une dite deuxième translation relative de sorte que :
   (a2) le dit deuxième ressort se trouve détendu en dite position de pré-accostage et dite position de désaccostage, et
   (b2) le dit deuxième ressort se trouve comprimé en dite position d'accostage du goujon en butée contre la dite surface de la pièce à souder.

Plus particulièrement, les dits les axes de guidage sont vissés sur ledit corps principale te coulissent dans ladite partie avant dudit caisson.

On entend ici par « désaccostage » que le dispositif de soudage est à distance suffisante de la surface à souder pour ne pas empêcher l'extension maximale des dits premier et deuxième ressorts, la cloche se trouvant à une distance maximale (d0) par rapport au caisson en dite deuxième translation relative.

La compression partielle du dit premier ressort en dite position d'accostage autorise une extension ultérieure de l'extrémité du goujon lors d'un dit première translation relative de soudage, l'extrémité avant du goujon se trouvent au-delà (d2) du bord d'appui de la couronne crénelée en plongeant au sein du bain de fusion. Ceci permet, après refroidissement du bain de soudage, un ancrage de l'extrémité avant du goujon dans la surface à souder.

La compression maximale du premier ressort intervient lors du recul maximal du goujon permettant l'établissement d'un arc électrique avec la surface à souder lors des aller et retour en dite première translation pendant l'opération de soudage.

Plus particulièrement, un premier capteur de préférence coopérant avec au moins une première butée mécanique, permet de contrôler une distance intermédiaire de la cloche par rapport au caisson en dite deuxième translation relative dans laquelle la cloche est rapprochée du caisson correspondant à une compression partielle du dit deuxième ressort la dite couronne crénelée et l'extrémité avant dudit goujon se trouvant en contact avec une dite surface de pièce à souder, ledit premier ressort étant détendu, de préférence.

On comprend que la différence entre les distance maximale (d0) et distance intermédiaire d'écart entre le caisson et la dite cloche correspond à la distance de retrait (d1) de l'extrémité avant du goujon en dite position de préaccostage.

Plus particulièrement encore, un deuxième capteur, de préférence coopérant avec au moins une deuxième butée mécanique, de préférence encore une deuxième butée mécanique disposée sur un dit axe de guidage en entretoise entre le caisson et la cloche, permet de contrôler :
- une distance minimale (d3) de la cloche par rapport au caisson en dite deuxième translation relative en dite position d'accostage de l'outil de soudage dans laquelle la cloche est le plus proche du caisson correspondant à une compression maximale autorisée du dit deuxième ressort la dite couronne crénelée se trouvant en contact avec une dite surface de pièce à souder, et
- l'extrémité avant dudit goujon supporté par ledit support de goujon se trouvant en butée contre ladite surface de la pièce à souder, ledit premier ressort étant en compression partielle en dite position d'accostage de sorte que lors du soudage l'extrémité avant du goujon s'étend en avant de ladite couronne, au sein du bain de fusion du fait de la dite première translation.

Ce deuxième capteur permet de contrôler l'arrêt du deuxième flux de gaz avant le soudage en dite position d'accostage une fois que l'extrémité avant dudit goujon supporté par le dit support de goujon ne se trouve plus en retrait par rapport à ladite surface de la pièce à souder.

On comprend que :
- l'écart entre les distance maximale (d0) et distance minimale (d3) entre le caisson et la dite cloche correspondant à la distance cumulée (dl+d2) de la distance de retrait (d1) de l'extrémité avant du goujon en dite position de préaccostage d'une part et d'autre part de la distance de recul relatif (d2) par rapport au caisson de l'extrémité avant du goujon du fait de la compression du premier ressort, laquelle compression du premier ressort permet ultérieurement lors du soudage une extension additionnelle de d2 en avant de ladite couronne, au sein du bain de fusion lors du soudage du fait de la dite première translation, et
- ainsi, l'amplitude maximale de dite première et deuxième translation est de d1 + d2.

En pratique, à titre illustrative, on peut régler cette butée mécanique pour que, pour une amplitude maximale de première translation de 2.75 mm lors du soudage, d'une part la distance d2 de recul du support de goujon du fait de la compression des deux ressorts en dite position d'accostage et la profondeur d'enfoncement du goujon dans le bain de fusion d2 est de 1.5mm et d'autre part la distance de retrait du goujon en dite position de pré-accostage et détente des deux ressorts d1 est de 4mm.

Dans un mode préféré de réalisation, l'outil de soudage selon l'invention comprend un dispositif de positionnement apte à coopérer avec le dit dispositif de soudage et une surface de pièce à souder pour :
- positionner ledit dispositif de soudage avec son axe longitudinal (XX') perpendiculaire à ladite surface de pièce à souder, et
- effectuer une translation du dispositif de soudage par rapport à la surface à souder et une dite deuxième translation de façon contrôlée entre une dite position de pré-accostage et une dite position d'accostage.

Plus particulièrement, ledit dispositif de positionnement comprend :
- un châssis apte à supporter et guider en translation le dit dispositif de soudage comprenant au moins un rail de guidage coopérant avec un élément de guidage complémentaire solidaire dudit caisson pour permettre le coulissement du dit caisson dans une dite direction axiale longitudinale (XX') du dispositif de soudage, et
- un support de fixation apte à être fixé avec des moyens de fixation sur une dite surface de la pièce à souder et apte à coopérer avec ledit châssis dans la dite direction longitudinale (XX') de sorte que l'on peut réaliser :
- tout d'abord, un dit coulissement guidé du dispositif de soudage sur le dit châssis jusqu'à ce que la dite cloche entre en contact avec ladite surface à souder, puis
- une dite deuxième translation relative en continuant le dit coulissement longitudinal du caisson sur le dit châssis avec la dite cloche en butée sur la dite surface à souder.

Plus particulièrement encore, ledit corps principal de la cloche renferme dans sa masse des canaux de distribution de gaz s'étendant dans des directions radiales perpendiculaires à la dite direction longitudinale axiale ou de préférence des directions inclinées (Y1Y1', Y2Y2') par rapport aux dites directions radiales, les dits canaux formant des orifices latéraux débouchant au niveau de la paroi latérale délimitant ladite deuxième chambre interne, lesdits canaux et dit orifices latéraux étant disposés symétriquement par rapport audit axe longitudinale (XX') du dispositif de soudage, et dit orifices latéraux étant disposés latéralement en vis-à-vis de l'extrémité du dit goujon lorsque celui-ci est sur ledit support de goujon et en retrait (d1) par rapport à l'extrémité avant de la dite couronne en dite position de pré-accostage, de préférence lesdits axes (Y1Y1', Y2Y2') des dits canaux étant inclinés de façon à converger au niveau de l'extrémité du dit goujon et de préférence encore de façon à ce que le dit deuxième flux de gaz sortant de chacun desdits canaux recouvre l'espace (d1) entre l'extrémité avant du dit goujon et la surface à souder en contact avec la dite cloche et circonscrite par la dite couronne.

Plus particulièrement encore, ledit premier circuit par lequel un premier flux de gaz peut être envoyé dans ladite première chambre interne à l'avant du caisson et en direction du dit orifice central de ladite deuxième chambre interne de la dite cloche avec laquelle elle communique, ledit premier flux pouvant arriver au niveau du dit orifice central parallèlement ou selon une première inclinaison (α1) par rapport à la direction longitudinale axial.

La présente invention fournit également un procédé de mise en œuvre d'un outil de soudage selon l'invention, conformément à l'objet de la revendication 11, comprenant les étapes suivantes :
E1) on positionne le dispositif de soudage avec la dite couronne en contact contre la surface de la pièce à souder, l'axe longitudinal (XX') dudit goujon supporté par le dit support de goujon étant perpendiculaire à la surface de la pièce à souder, l'extrémité avant dudit goujon se trouvant en retrait vers l'arrière (d1) par rapport à la surface de la pièce à souder en position de pré-accostage,
E2) en dite position de pré-accostage, on envoie un dit deuxième flux de gaz dans ledit deuxième circuit de façon à chasser toute trace d'humidité au niveau de ladite extrémité avant du goujon avant de passer en dite position d'accostage et concomitamment, de préférence, un dit premier flux de gaz dans ledit premier circuit de façon à évacuer l'eau contenu dans les dite première chambre interne et dite deuxième chambre interne et dite couronne,
E3) on réalise une dite deuxième translation relative du caisson par rapport à la dite cloche pour passer d'une dite position de pré-accostage à une dite position d'accostage dans laquelle l'extrémité avant dudit goujon se trouvant compressé en butée contre ladite surface de la pièce à souder, et
E4) on interrompt d'envoyer ledit deuxième flux de gaz et on maintient ledit premier flux de gaz, et on réalise ledit soudage en réalisant une dite première translation dudit support de goujon par rapport au caisson à l'aide de dits des moyens motorisés et en déclenchant un arc électrique de soudage entre l'extrémité avant du goujon et une surface d'une pièce à souder, et
E5) après soudage, on désolidarise le goujon du support de goujon et on écarte le dispositif de soudage de la dite surface sur laquelle ledit goujon est soudé en réalisant une dite deuxième translation en sens inverse à l'issue de laquelle la cloche se retrouve plus éloigné (d0) du caisson et le dit support de goujon se trouvant en retrait vers l'arrière par rapport à l'extrémité avant de la dite couronne crénelée dans une position de désaccostage.

A l'étape E4), on interrompt d'envoyer ledit deuxième flux de gaz et on maintient ledit premier flux de gaz, avant le soudage pour que le dit deuxième flux ne perturbe pas le soudage au niveau du bain de soudage, et on maintient ledit premier flux de gaz pour empêcher la pénétration d'eau dans ladite cloche et ladite zone de soudage pendant le soudage.

Plus particulièrement, dans le procédé de soudage selon l'invention :
- à l'étape E1), on fixe le dispositif de soudage sur un dispositif de positionnement lui-même fixé sur la dite surface de la pièce à souder, ledit dispositif de soudage étant ainsi positionné avec ledit axe longitudinal (XX') perpendiculaire à ladite surface de pièce à souder et on effectue une translation du dispositif de soudage dans son ensemble par rapport à la surface de la pièce à souder à l'aide du dit dispositif de positionnement, et
- à l'étape E3), on effectue une dite deuxième translation du caisson par rapport à ladite cloche de façon contrôlée entre une dite position de pré-accostage et une dite position d'accostage à l'aide du dit dispositif de positionnement, et
- à l'étape E5), on effectue une dite deuxième translation inverse du caisson par rapport à ladite cloche de façon contrôlée entre une dite position d'accostage et une dite position de désaccostage à l'aide du dit dispositif de positionnement, puis on dégage l'ensemble dudit dispositif de soudage par rapport à la surface de la pièce à souder sur laquelle ledit goujon est ancré par soudage par translation inverse à l'aide du dit dispositif de positionnement.

Plus particulièrement encore, à l'étape E4), avant le dit soudage, on contrôle avec au moins un capteur que de préférence apte à coopérer avec au moins une butée mécanique que la dite couronne crénelée et l'extrémité avant dudit goujon supporté par le dit support de goujon se trouvent en butée contre ladite surface de la pièce à souder.

Plus particulièrement encore, dans le procédé de soudage selon l'invention :
- à l'étape E3), ladite deuxième translation relative du caisson par rapport à la cloche est guidée par des axes de guidage sur lesquels ledit corps principal de la dite cloche est monté, les dits axes de guidage étant solidaires de la partie avant du dit caisson délimitant la dite première chambre interne, et le dit corps principal de la cloche coopère avec un deuxième ressort lors d'une dite deuxième translation relative de sorte que :
   (a2) le dit deuxième ressort se trouve détendu en dite position de pré-accostage, et
   (b2) le dit deuxième ressort se trouve comprimé en dite position d'accostage du goujon en butée contre la dite surface de la pièce à souder, et
- à l'étape E4), lors du soudage, ledit support de goujon coulisse au sein de la première chambre en dite première translation relative en coopérant avec un dit premier ressort tel que :
   (a1) ledit premier ressort est en position de détente lorsque le dit goujon est en dite position de pré-accostage, et
   (b1) ledit premier ressort est en position partiellement comprimée lorsque ledit goujon est en dite position d'accostage en butée contre ladite surface de la pièce à souder.

Plus particulièrement encore, à l'étape E3), avant le dit soudage, on contrôle successivement :
(c1) avec un premier capteur de préférence coopérant avec au moins une première butée mécanique, que l'on se trouve dans une position avec une distance intermédiaire de la cloche par rapport au caisson en dite deuxième translation relative, la cloche étant rapprochée du caisson correspondant à une compression partielle du dit deuxième ressort, la dite couronne crénelée et l'extrémité avant dudit goujon se trouvant en simple contact avec une dite surface de pièce à souder, ledit premier ressort étant détendu, puis
(c2) avec un deuxième capteur, de préférence coopérant avec au moins une deuxième butée mécanique, de préférence encore une deuxième butée mécanique disposée sur un dit axe de guidage en entretoise entre le caisson et la cloche, l'arrêt du deuxième flux de gaz et le déclenchement du soudage lorsqu'on se trouve dans une dite position d'accostage avec :
   - une distance minimale de la cloche par rapport au caisson en dite deuxième translation relative en dite position d'accostage de l'outil de soudage dans laquelle la cloche est le plus proche du caisson correspondant à une compression maximale autorisée du dit deuxième ressort la dite couronne crénelée se trouvant en contact avec une dite surface de pièce à souder, et
   - l'extrémité avant dudit goujon en compréssée butée contre ladite surface de la pièce à souder, ledit premier ressort étant en compression partielle en dite position d'accostage de sorte que lors du soudage l'extrémité avant du goujon s'étend en avant de ladite couronne, au sein du bain de fusion du fait de la dite première translation.

Plus particulièrement encore, on réalise le soudage d'un goujon sur une surface d'une pièce à souder dans une atmosphère contaminée par des rayonnements nucléaires, de préférence une surface d'une porte de batardeau au sein d'une piscine de centrale nucléaire.

D'autres caractéristiques et avantages de la présente invention ressortiront mieux à la lecture de la description qui va suivre, faite de manière illustrative et non limitative, en référence aux dessins annexés sur lesquels :
La figure 1A représente une vue en coupe d'un porte de batardeau 11 montrant le montage d'un goujon 10 soudé à sa surface ;
La figure 1B représente un pistolet 100 de soudage de goujon standard dont le corps principal 101 est repris dans le dispositif 2 des figures 2 et suivantes (à l'exception de la poignée et gâchette ainsi que des tiges de guidage).
La Figure 1C illustre la séquence des différentes phases d'un soudage à l'arc de goujon par fusion et forgeage dans le cas d'utilisation d'une bague en céramique.
La figure 2 représente un outil de soudage selon l'invention avec un dispositif de soudage 2 monté sur un dispositif de positionnement
La figure 2A montre le châssis support 15 du dispositif de positionnement.
La figure 2B montre le support de fixation 16 sur la surface à souder du dispositif de positionnement
La figure 2C représente une partie du dispositif de soudage de goujon sous eau selon l'invention montrant en éclaté les composant d'un pistolet de soudage l'intérieur d'un caisson formant enceinte de protection de celui-ci, en vue arrière avec une cloche d'inertage sur l'avant
La figure 2D représente la partie du dispositif de soudage de goujon sous eau selon la figure 2C en vue avant avec le caisson formant enceinte de protection.
Les figures 3A et 3B sont des vues de côté (fig. 3A) et en perspective (fig. 3B) de la cloche à l'avant du dispositif de soudage 2.
Les Figures 3C et 3D sont des vues en coupes longitudinales verticale (fig. 3C) et horizontale (fig. 3D) de la cloche 4 des figures 3A et 3B.
La figure 4 est une vue en coupe longitudinale verticale d'un dispositif de soudage selon l'invention en position initiale avant contact avec la surface à souder 11a.
Les figures 4A et 4B sont des vues en coupes longitudinales verticale (fig. 4A) et horizontale (fig. 4B) d'un dispositif de soudage selon l'invention 2 en position de pré-accostage pour séchage de l'extrémité du goujon et de la zone à souder.
Les figures 4C et 4D sont des vues de côté (fig. 4C) et en coupe verticale (figure 4D) au niveau de la cloche en position de préaccostage, vue de côté (fig. 4C) et en coupe (fig. 4D).
La figure 5 est une vue en coupe longitudinale verticale d'un dispositif de soudage selon l'invention en position d'accostage avec l'extrémité du goujon en butée contre la surface à souder.
Les figures 5A et 5B sont des vues de la cloche en position d'accostage du goujon pour soudage de côté (fig. 5A) et en coupe verticale (fig. 5B).
La figure 6 est une vue en coupe longitudinale horizontale d'un dispositif de soudage selon l'invention en position d'accostage et de soudage avec l'extrémité du goujon en butée contre la surface à souder.
La figure 6A est une vue en coupe de la cloche avec le goujon plongeant dans le bain de fusion et dans la surface à souder après soudage.

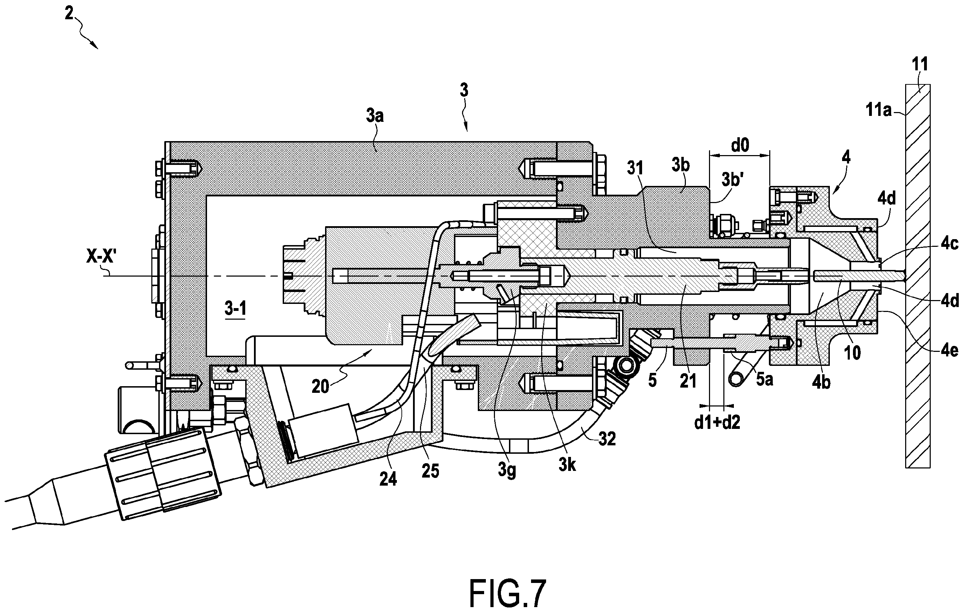

La figure 7 est une vue en coupe verticale d'un dispositif de soudage selon l'invention en position de désaccostage avec l'extrémité du goujon soudée contre la surface à souder.
La figure 8 est une vue d'une coupe macrographique d'une soudure obtenue avec le pistolet automatique de soudage de goujon sous eau selon l'invention.

L'invention est illustrée par le soudage d'un goujon sur une surface 11a d'une pièce à souder 11 dans une atmosphère contaminée par des rayonnements nucléaires au sein d'un centrale nucléaire, et plus particulièrement tel que représenté sur la figure 1A pour le soudage d'un goujon 10 à la surface d'une porte de batardeau 11 au sein d'une piscine de centrale nucléaire. L'outil de soudage selon l'invention décrit ci-après permet en particulier de réaliser une soudure à proximité du bord 11b de la surface 11a de la pièce métallique sur laquelle on veut souder le goujon.

Ces portes de batardeaux assurent la séparation physique des différents compartiments constitutifs des piscines de centrales nucléaires. Elles sont équipées de joints statiques et dynamiques garantissant l'étanchéité de la porte lorsqu'elle se trouve en position fermée. Les goujons à remplacer assurent le placage de ces joints contre la porte par l'intermédiaire d'un système de plaquette et écrou coopérant avec ledit goujon.

Sur la figure 1A on montre une vue en coupe d'une porte de batardeau 11 explicitant le montage détaillé précédemment d'un goujon 10 soudé à sa surface et coopérant avec une plaquette 3a' et un écrou 4a' pour serrer le joint 2a' contre la surface de la porte 11. Lors du remplacement sous eau (par scaphandrier) de ces joints 2a', il arrive que la soudure entre les goujons 10 et la porte de batardeau 11 cassent sous les efforts de serrage/desserrage.

Le dispositif de soudage selon la présente invention vise à permettre le remplacement sous eau de ces goujons évitant ainsi de sortir la porte de batardeau de la piscine pour une éventuelle réparation en air d'autant plus que la conception de certaines portes rend impossible cette éventualité. En tant que variante, le dispositif pourrait permettre la création d'ancrages servant à fixer des supports et autres matériels sur des liners de piscine.

L'outil de soudage 1 selon la présente invention réalise un soudage à l'arc dont les différentes étapes conventionnelles sont illustrées sur la figure 1C. Ce type de soudage est réalisé en général avec des dispositifs de type pistolet automatique de soudage tel qu'illustré sur la figure 1B. L'outil de soudage 1 selon la présente invention est une adaptation pour un soudage sous eau du pistolet automatique de la figure 1B représentant un pistolet de soudage de goujon standard de marque NELSON® sous la référence NS40B3-14. Seul le corps du pistolet 101 (partie entourée d'un rectangle sur le figure 1B) a été gardé et intégré au corps caisson 3 de l'outil de soudage selon l'invention telle que décrite ci-après. Cette partie renferme un système à bobine permettant un mouvement de translation alternative du support de goujon en aller et venue et la création d'un arc de soudage pendant le cycle de soudage lorsque l'extrémité 10a du goujon est en retrait par rapport à la surface à souder (étape C fig. 1C). L'arc électrique crée un bain de fusion 13 au niveau du contact entre l'extrémité 10a du goujon et la surface 11a de la pièce à souder 11.

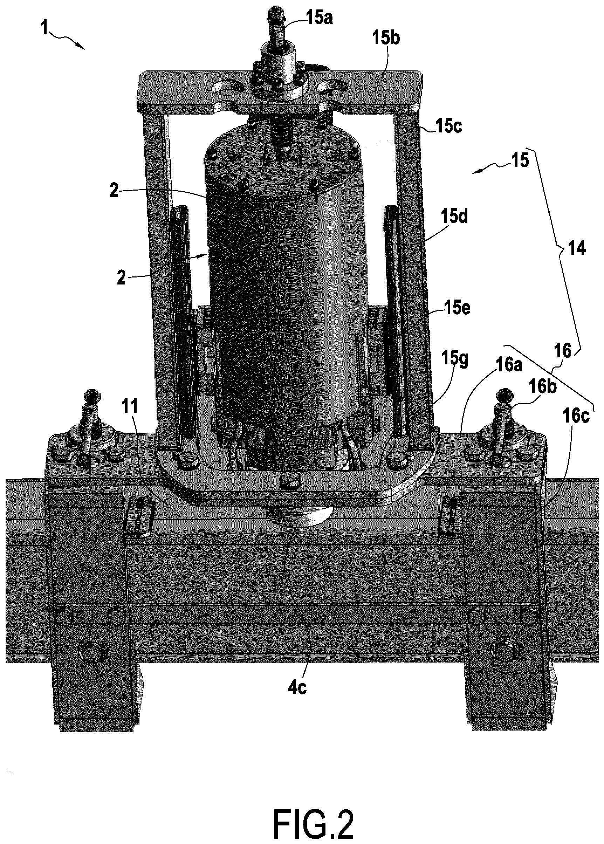

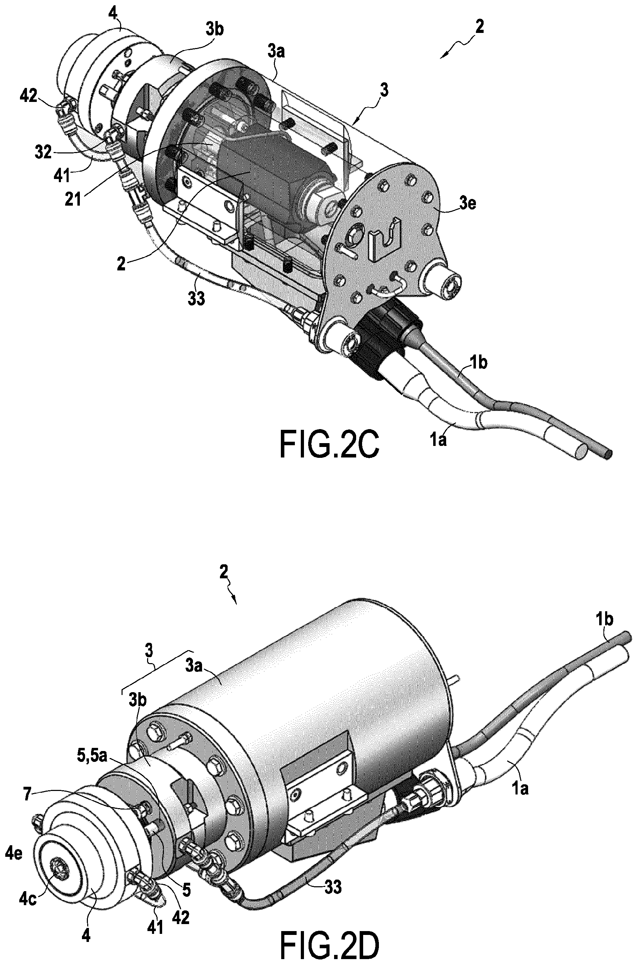

L'outil de soudage 1, selon l'invention tel que représenté sur les figures 2C et 2D et sa mise en œuvre dans un procédé de soudage de goujon sous eau développé dans le cadre de la présente invention, est un procédé dérivé du procédé conventionnel de soudage de goujon par fusion et forgeage (procédé 783 au sens de la norme NF EN ISO 6947). Toutefois dans ce procédé conventionnel, une bague céramique est utilisée afin de contenir le bain de fusion 13 et le protégé de l'oxydation. Cependant, selon la présente invention, cette bague n'est pas mise en œuvre afin de ne pas générer de déchet, la seule mise en œuvre d'un gaz composé de 82% d'argon et 18% C02 selon les modalités décrites ci-après permettant de remplacer ladite bague de céramique.

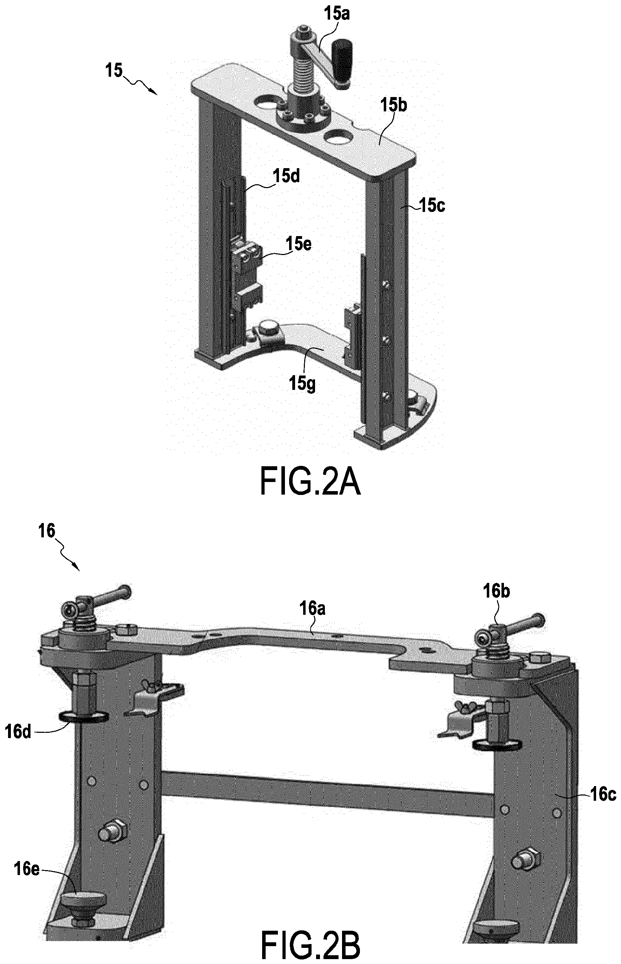

L'outil de soudage 1 selon la présente invention comprend un dispositif de soudage 2 décrit figures 2C et 2D coopérant avec dispositif de positionnement 14 décrit figures 2, 2A et 2B, ainsi qu'un coffret de commande en surface (non représenté).

Le dispositif de soudage 2 comprend un caisson 3 renfermant un support de goujon 21 et coopérant avec la cloche 4 à l'avant.

Le caisson 3 comporte :
- une première partie principale arrière 3a de forme essentiellement cylindrique renfermant une chambre interne 31c comprenant principalement des moyens motorisés 22 aptes à déplacer en translation alternative dénommée ci-après « première translation relative » en aller et retour du support de goujon 21 dans la direction longitudinale axiale XX' du dispositif lorsqu'on commande une opération de soudage, et
- une deuxième partie avant de caisson 3b-3c également de forme essentiellement cylindrique de plus petit diamètre que la partie principale arrière 3a et renfermant en son sein une première chambre interne 31 séparée de la chambre interne 3-1 de la partie principale arrière 3a du caisson par un bloc interne 3k supportant un support de goujon 21 contenu au sein de ladite première chambre interne 31 de la deuxième partie 3b-3c du caisson.

La deuxième partie du caisson comprend une portée avant de plus petit diamètre entourée d'un ressort coaxial 6 contrôlant l'écart entre le caisson 3 et la cloche 4 décrite ci-après.

Le support de goujon 21 est monté apte à coulisser au sein de la première chambre interne 31 en première translation relative par rapport au caisson 3 en aller et retour dans la direction longitudinale XX', de par un joint périphérique torique 26 coopérant avec la paroi interne de ladite première chambre interne 31.

Les moyens motorisés 20 de dite première translation interne, aptes à déplacer le support de goujon 21 en dite première translation relative en aller et retour dans la direction longitudinale XX', comprennent un moteur 22 coopérant avec un premier ressort 23. Le moteur 22 est alimenté par un premier câble électrique 24 tandis qu'un deuxième câble électrique 25 de forte puissance assure l'alimentation électrique pour le déclenchement de l'arc électrique de soudage entre l'extrémité 10a du goujon et la surface 11a de la pièce à souder 11.

Le corps caisson 3, et le support de goujon 21 qu'il renferme dans sa partie avant 3b-3c, est tiré d'un pistolet de soudage conventionnel tel que décrit précédemment. Il coopère avec des liaisons électriques 24 et 25 et des circuits d'alimentation en gaz 41 et 32 décrits ci-après, notamment un mélange de CO2 et argon, nécessaires au pilotage d'un cycle de soudage commandé depuis un coffret de commande installé en surface. Les moyens motorisés et moyens de déclenchement d'un arc électrique comprennent un système à bobine permettant le mouvement de dite première translation du support de goujon et la création d'un arc de soudage pendant le cycle de soudage.

La partie avant 3b-3c du caisson 3 contenant le support de goujon 21 et le goujon 10 monté à l'extrémité du support de goujon dans la direction longitudinale XX' coopère avec une cloche spécifique 4 selon la présente invention. La cloche 4 comprend un corps principal de cloche 4a monté coaxialement à l'avant du caisson 3 et délimitant une deuxième chambre interne 4b apte à recevoir le dit goujon monté sur le support de goujon 21 disposé coaxialement.

Ladite première translation relative du support de goujon 21 en aller et retour par rapport au caisson 3 est contrôlée par un premier ressort 23 qui est comprimé et détendu par l'action du moteur 22 sur une partie interne 3g supportant le support de goujon 21 et donc entrainant en dite première translation relative le support de goujon 21 qui lui est solidaire.

La deuxième chambre interne 4b présente une partie arrière cylindrique 4b1 communiquant avec la première chambre interne 31 et sensiblement de même diamètre.

La partie arrière cylindrique 4b1 se prolonge vers l'avant par une paroi tronconique 4b2 et se termine à l'avant par une partie cylindrique de plus petit diamètre 4b3 débouchant sur un orifice central circulaire coaxial 4d au sein d'une paroi transversale avant 4e délimitant le corps principal 4a de la cloche.

Selon une caractéristique originale de la présente invention, l'orifice central 4d à l'avant de la cloche 4 est bordé par une couronne coaxiale crantée ou crénelée 4c s'étendant dans la direction longitudinale XX' au-delà de la paroi transversale avant 4e de la cloche 4 sur une longueur.

Pour réaliser une soudure, on applique la couronne crénelée 4c contre la surface 11a de la pièce à souder 11. De façon connue, la cloche 4, aussi appelée cloche d'inertage, permet de créer une atmosphère gazeuse, y injectant un gaz permettant de chasser l'eau dans la zone délimitée par la couronne crantée 4c et la zone de la surface de la pièce à souder délimitée par la couronne 4c. Le gaz injecté dans la deuxième chambre interne et la couronne 4c permet de chasser l'eau par l'espace entre les créneaux de la couronne crénelée 4c. Comme décrit ci-après, la cloche 4 comprend des caractéristiques qui permettent en outre d'assécher l'extrémité du goujon et la zone de la surface de la pièce à cibler avant de réaliser une opération de soudage.

Le corps principal 4a de la cloche est monté apte à coulisser le long de tiges longitudinales 5 solidaires de la partie avant 3b du caisson par l'intermédiaire de joints toriques 27 périphériques entre la cloche et la surface externe de la partie avant 3c du caisson. Les tiges 5 entourent la partie avant 3c de plus petit diamètre du caisson. Le coulissement de la cloche 4 par rapport au caisson 3 aussi dénommé deuxième translation relative selon la direction longitudinale XX' et contrôlé par un deuxième ressort 6 qui en position détendue commande, entre la distance d'une paroi transversale externe 3d' d'une partie avant 3b du caisson et une paroi transversale arrière (4a') du corps principal de cloche (4), cette distance varie entre une distance maximale D₀ et une distance minimale D₃.

La distance minimale D₃ et maximale D₀ entre le corps de caisson 3 et la cloche 4 en dite deuxième translation relative selon la direction longitudinale XX', et contrôlé par une première butée mécanique 8 qui coopère avec un première capteur de telle sorte que lorsque les dits premier ressort 23 et deuxième ressort 6 sont en position détendue d'extension, le dispositif de soudage étant au repos, l'extrémité avant 10a du goujon monté sur le support de goujon se trouve en retrait d'une distance d1 par rapport à l'extrémité avant de la couronne crénelée 4c à l'extrémité avant de la cloche 4. Cette distance de retrait d1 de l'extrémité avant 10a du goujon par rapport à l'extrémité avant de la couronne crénelée 4c permet de réaliser une position dite de pré accostage dans laquelle la face avant de la couronne crénelée 4c est en contact sur la surface 11a de la pièce à souder 11 délimitant un petit espace d'épaisseur e entre la paroi transversale avant 4e de la cloche 4 et la surface 11a de la pièce à souder 11, espace e par lequel l'eau contenu dans ladite cloche pourra être évacuée sous l'effet d'un gaz injecté dans ladite cloche.

La distance D₁ de retrait de l'extrémité avant du goujon par rapport à la surface de la pièce à souder permet, comme décrit ci-après, un séchage complet de la zone 12 de la pièce à souder de l'extrémité avant du goujon avant de réaliser un soudage, grâce à un deuxième circuit de distribution de gaz 40.

Avant la réalisation du soudage, on actionne en dite deuxième translation le caisson 3 par rapport à la cloche 4 en butée contre la surface 11a de la pièce à souder 11 jusqu'à ce que l'extrémité avant du goujon 10 arrive en contact avec la surface 11a de la pièce à souder 11. Lorsque l'extrémité avant 10a du goujon 10 arrive en contact avec la surface 11a de la pièce à souder 11, on continue ladite deuxième translation jusqu'à ce que la distance entre la cloche 3 et la cloche 4 atteigne une valeur minimale D₃ contrôlée par une deuxième butée mécanique 5a et un deuxième capteur 7. Plus précisément, la deuxième butée mécanique 5a est disposée à une distance D₁ + D₂ de la dite paroi transversale externe 3b' lorsque ladite paroi transversale externe 3b' est disposée à la distance maximale D₀ de ladite paroi transversale arrière 4a' du corps principal 4a de la cloche. La distance D₂ correspond à une distance de compression vers l'arrière du premier ressort 23 sous l'effet d'une dite deuxième translation du caisson 3 par rapport à la cloche 4 et dite première translation relative du support de goujon par rapport au caisson avec l'extrémité du goujon 10a en appui contre la surface 11a de la pièce à souder 11, entrainant un recul relatif du goujon et du support de goujon par rapport à la cloche et au caisson jusqu'à obtenir une position dite position d'accostage dans laquelle l'extrémité du goujon 10a est en appui sous pression contre la surface 11a de la pièce à souder 11. Ainsi lorsque l'on déclenche une opération de soudage, la translation avant dans la direction longitudinale XX' de l'extrémité avant 10a du goujon rentre dans le bain de fusion 13 sur une distance additionnelle D₂ en avant de la dite surface 11a et de l'extrémité avant de la couronne crénelée 4c.

Lorsque le dispositif de soudage est dans ladite position d'accostage dans lequel l'extrémité avant du goujon 10a est en contact contre la surface 11a de la pièce à souder 11a avec une compression du premier ressort 23 d'une distance D₂, la paroi transversale externe 3b' du caisson 3 est en contact bloquant avec la dite deuxième butée mécanique 5a. La dite deuxième butée mécanique 5a coopère alors avec un deuxième capteur 7 qui permet de détecter la dite position d'accostage par contact avec la dite paroi transversale arrière 4a' de la cloche 4 et de déclencher le processus de soudage avec les déplacements en dite première translation du support de goujon 21 par rapport au caisson 3 et création d'un arc électrique de soudage.

Lorsque le caisson 3 est en contact avec ladite deuxième butée mécanique 5a, l'espace entre le caisson 3 et la cloche 4 atteint la valeur minimale D₃ telle que D₀-D₃ = D₁+D₂, correspondant à une dite position d'accostage.

Selon la présente invention, le dispositif de soudage 2 est muni de deux circuits de distribution de gaz destinés à créer deux flux de gaz distincts. Un premier flux de gaz 30 nommé flux axial a pour fonction d'évacuer l'eau accumulé dans la cloche 4 aussi bien pendant la phase de préaccostage que pendant la phase d'accostage et de soudage. Et, un deuxième flux 40 dénommé flux radial a pour fonction de chasser les gouttes d'eau pouvant persister en extrémité du goujon et sécher au maximum la zone à souder de la surface 11a de la pièce à souder 11 permettant, en position de préaccostage, avant de réaliser le soudage en dite position d'accostage.

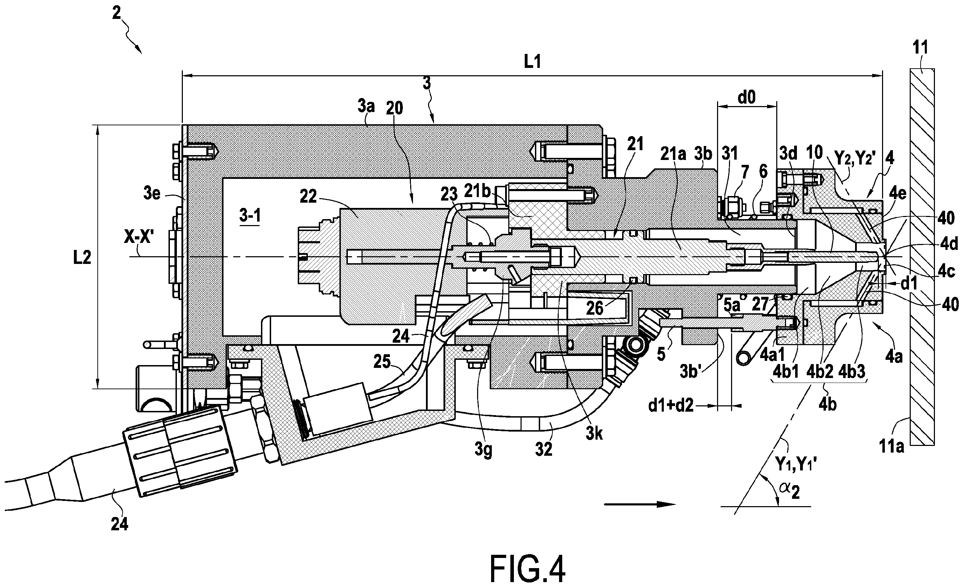

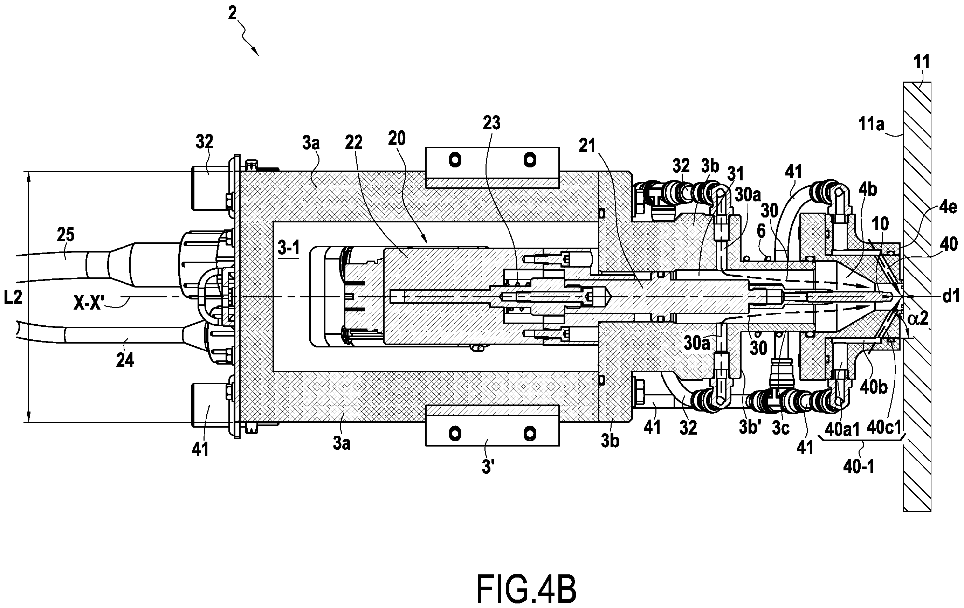

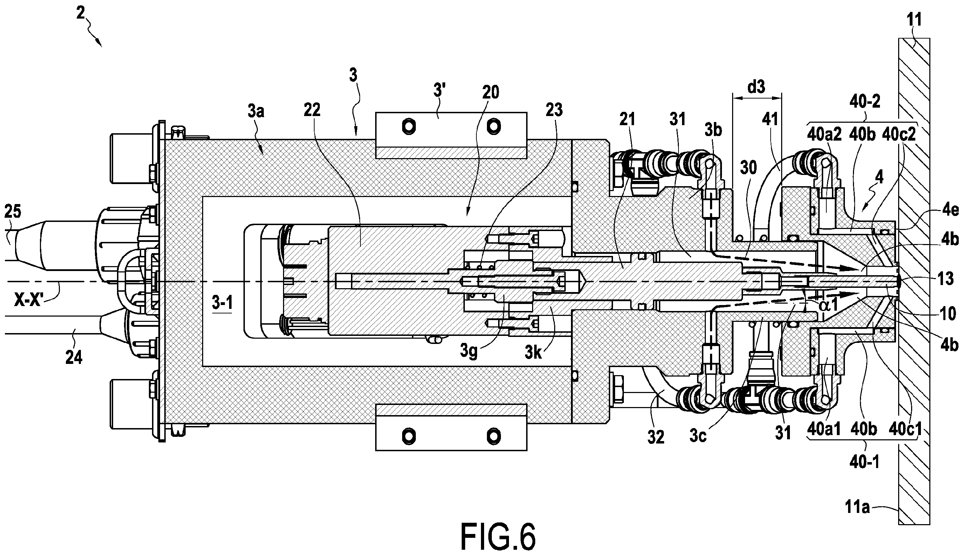

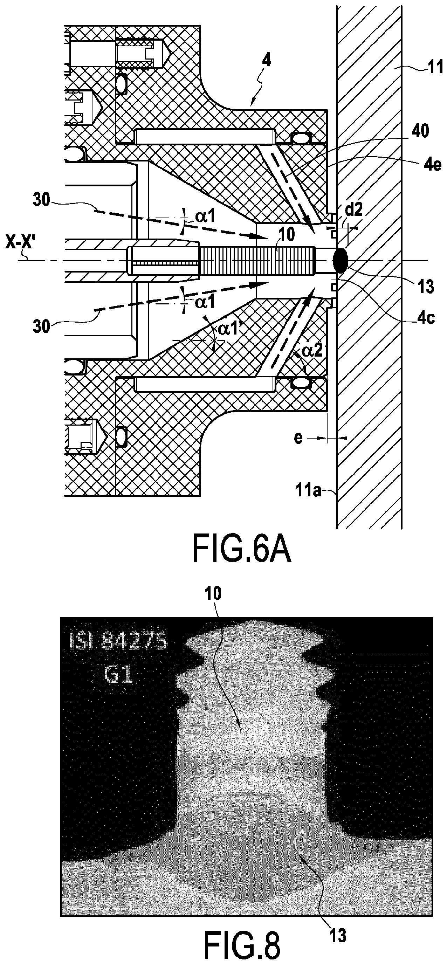

Le premier circuit de distribution 30 est montré sur les figures 4B et 6 dans lequel les conduites 32 alimentent les canaux internes 30a disposés radialement au sein de la masse de la partie avant 3b du caisson 3 et débouchant en direction radiale au sein de la dite première chambre interne 31, la forme longitudinale dans la direction longitudinale XX' de la première chambre interne 30 induisant une orientation selon une première inclinaison α1▪du premier flux de gaz 30 en direction de l'orifice centrale 4 débordé par la couronne crantée 4c du fait de la faible inclinaison de l'angle α1▪de 1 à 5° qui est également induite par l'inclinaison α1' de la partie tronconique de la deuxième chambre interne 4b, le premier flux de gaz 30 s'écoule essentiellement en direction axiale. En pratique, α1 est de 5 à 30°.

Le gaz axial 30 est envoyé dans le caisson 3 par l'intermédiaire de deux canaux latéraux 30a disposé symétriquement pour assurer une diffusion homogène du gaz dans la première chambre interne 31, puis son évacuation vers la deuxième chambre interne 4 et l'orifice central 4d à l'avant de la cloche 4.

Un deuxième circuit de distribution de gaz 40-1, 40-2 est prévu dans la masse du corps principal 4a de la cloche 4. Plus précisément, deux conduits 41 alimentent au moins deux canaux de préférence au moins quatre canaux disposés radialement et symétriquement sur le pourtour de la deuxième chambre 4b, c'est-à-dire diamétralement opposés 40a1 et 40a2 ou en croix par rapport à l'axe longitudinal XX' débouchant sur une chambre annulaire 40b disposée coaxialement à la direction longitudinale axiale XX' et se prolongeant par une pluralité de canaux 4c1, 4c2 débouchant dans la dite deuxième chambre interne 4b au niveau de sa partie avant cylindrique juste à proximité de son extrémité avant. Ainsi, le deuxième flux de gaz 40 passant par lesdits canaux inclinés 4c1, 4c2 orientés vers l'orifice central 4d est orienté selon une deuxième inclinaison α2 de 45 à 60° en direction de l'espace d1 entre l'extrémité 10a et la zone de la surface 11a de la pièce à souder 11 en dite position de préaccostage.

La partie avant 4b3 et la couronne 4c de plus faible diamètre par rapport au reste de la deuxième chambre interne 4b de la cloche 4 permet de délimiter une surface d'appui sur la surface 11a de la pièce à souder 11, ainsi qu'un volume interne de la cloche de volume réduit afin de limiter le volume d'eau à évacuer.

Le cycle de soudage détaillé ci-après prévoit des phases de pré-accostage et d'accostage rendu possible par la dite deuxième translation de la cloche 4 sur l'extrémité 3c du caisson. Ce mouvement de translation est permis par trois axes de guidage 5 et ledit deuxième ressort 6.

La phase de pré-accostage permet l'assèchement de la zone à souder nécessaire à l'obtention d'une soudure de qualité. Pour ce faire, du gaz « radial » 40 est envoyé dans la cloche 4 et focalisé sur l'extrémité 10a du goujon et sur la zone à souder 12 par le biais de 4 canaux inclinés 40-1, 40-2 régulièrement espacés sur le pourtour de la cloche.

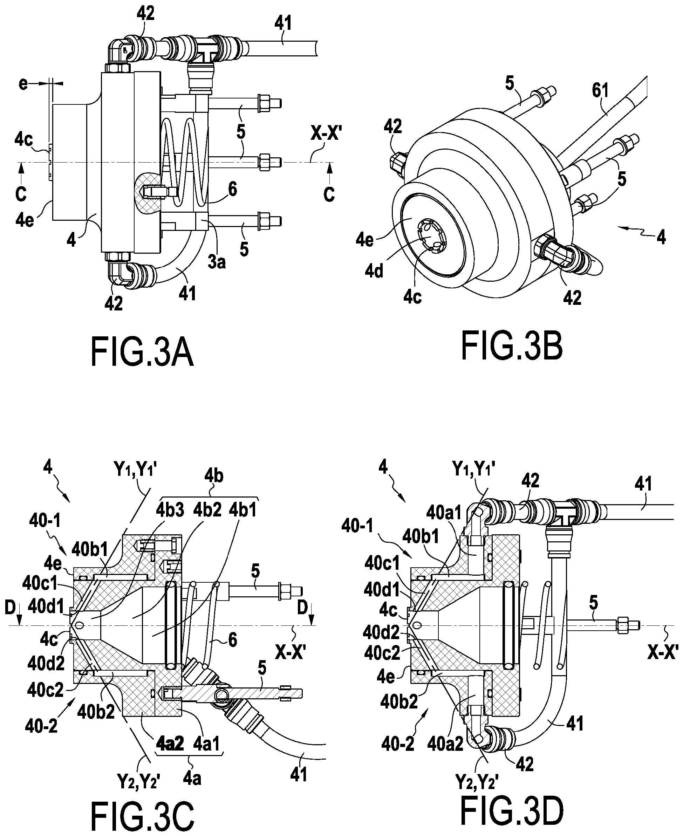

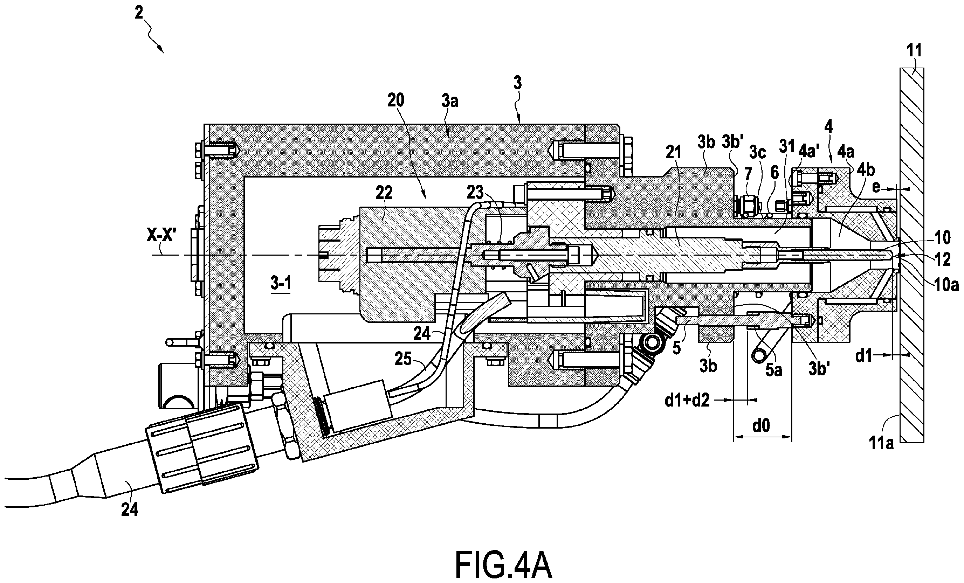

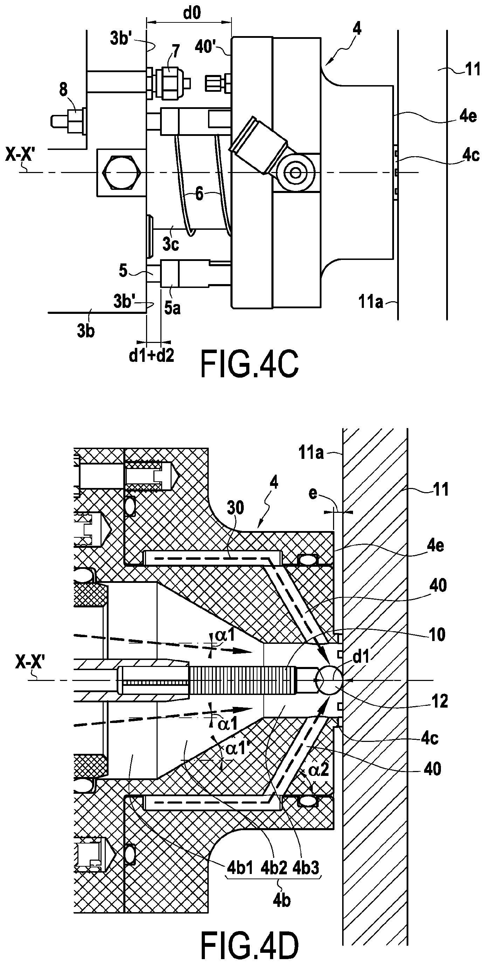

Les schémas des figures 3C-3D, 4, 4A-4B et 4D montrent le cheminement du gaz « radial » 40 ainsi que la position du goujon 10 en retrait de D₁ pendant cette phase de pré-accostage montré figures 4A-4C.

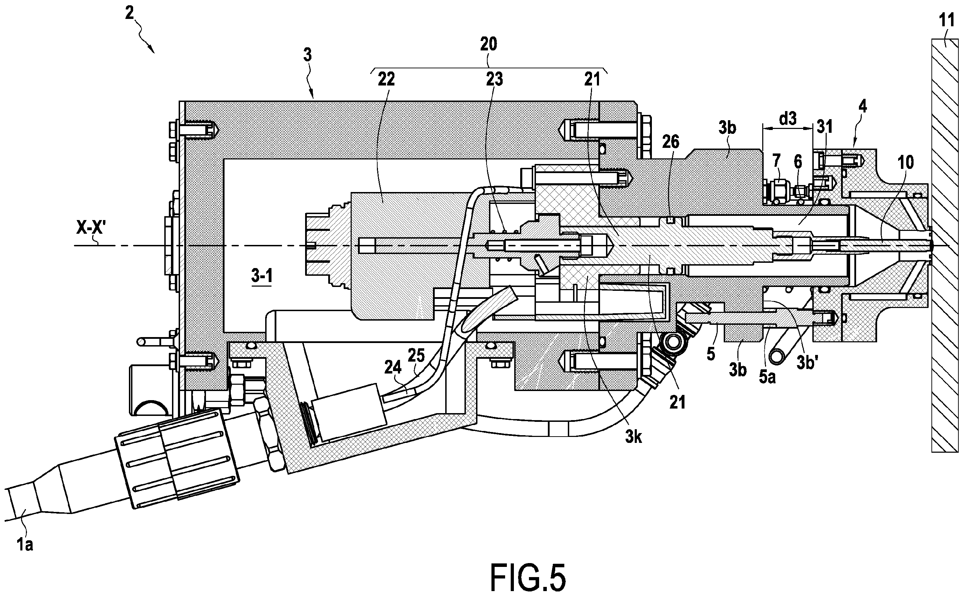

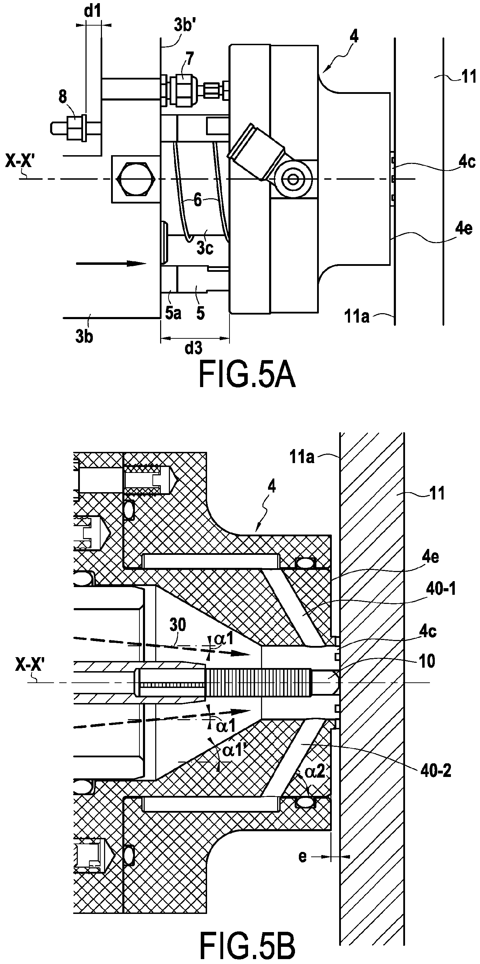

Dès lors que la couronne 4c est accostée comme montré figures 5 et 5B, on interrompt le flux du gaz « radial » et du gaz « axial » 30 est envoyé en continue, le cycle de soudage pouvant être lancé.

Le goujon 10 réalise alors un mouvement de translation (voir figure 1C : cycle de soudage de fusion et forgeage).

Après accostage de la couronne 4c, le goujon 10 est comprimé contre la surface 11a à souder par l'intermédiaire du premier ressort 23 contenu dans le caisson 3 correspondant à un rapprochement du caisson par rapport à la cloche d'une distance D₂. Comme indiqué précédemment, l'écart entre la cloche et le caisson est alors minimal à savoir de D₃ correspondant à un dépassement de l'extrémité 10a du goujon d'une distance D₂ au-delà de la surface 11a à l'intérieur du bain de fusion 13.

Dès l'actionnement du soudage via le coffret de commande en surface, le goujon 10 se retire d'une distance préréglée en dite première translation créant ainsi un arc électrique.

L'extrémité 10a du goujon plonge alors dans le bain de fusion 13 jusqu'à sa solidification complète comme montré figures 6 et 6A.

La suppression de la bague céramique mise en œuvre sur le procédé conventionnel a donc été rendu possible par la création de la cloche et des canaux de distribution de gaz qui permettent la protection et le maintien du bain de fusion pendant toute la durée de l'opération de soudage.

Les matériaux constitutifs du dispositif de soudage 2 sont :
Pour le caisson : PEHD,
Pour la cloche : PEEK, et

Pour les différents raccords des conduits de distribution de gaz et différentes vis : acier inoxydable.

Les dimensions globales du dispositif de soudage sont :
Longueur L1 : 416,4mm
Largeur L2 : 219mm
Poids : ≈ 10Kg

Pour être mis en œuvre sur une porte de batardeau 11, le dispositif automatique de soudage 2 de goujon sous eau est monté sur un outillage de positionnement 14 constitué des éléments suivants :
- un châssis support 15 apte à recevoir et guider dans la direction longitudinale xx' le dit dispositif de soudage 2 lorsque le dit châssis support est fixé sur un support de fixation 16 lui-même fixé sur la porte 11 par deux mâchoires 16c-16d.

Le dispositif de soudage 2 se fixe dans le châssis support 15 directement sur deux coulisseaux/chariots latéraux 15e par l'intermédiaire de vis/écrous.

Les coulisseaux latéraux 15e sont aptes à coulisser dans des rails de guidage 15d des montants latéraux 15c.

La face arrière 3e du caisson 3 du dispositif de soudage 2 coopère avec une vis sans fin 15a du châssis support 15 actionnée par une manivelle afin de pouvoir assurer les mouvements de translation du dispositif de soudage.

Pour réaliser les mouvements de translation du dispositif de soudage, l'opérateur tourne la manivelle 15a du châssis support dans un sens ou dans l'autre selon que l'on réalise une translation vers l'avant ou une translation inverse vers l'arrière.

Le châssis support 15 comprend donc 2 rails longitudinaux 15d en vis-à-vis portés par des profilés latéraux 15c, rails 15d dans lesquels coulissent des coulisseaux 15e solidaires des éléments de fixation 3' du caisson 3 et deux rails latéraux 15d sont réunis par une plaque supérieure 15b et une plaque inférieure 15g.

Le châssis support 15 est fixé à l'élément de support de fixation 16 par fixation de la plaque inférieure 15g sur la plaque supérieure 16a du support de fixation 16.

Le support de fixation 16 est fixé sur la porte de batardeau 11 par deux mâchoires 16d, 16e rapprochées l'une de l'autre par vissage à l'aide d'une manivelle 16b au niveau de la plaque supérieure 16a du support de fixation 16.

L'actionnement de la manivelle 15a au niveau de la plaque supérieure 15b du châssis support 15 permet de déplacer en translation l'ensemble du dispositif de soudage 2 le long des rails de guidage 15c et donc de rapprocher la cloche et la couronne 4c de la surface 11a sur laquelle est fixé le support de fixation 16 et ce jusqu'à une dite position de pré accostage.

A ce stade, la cloche 4 et le caisson 3 sont espacés l'une de l'autre d'une distance maximale D₀. Puis, l'actionnement continue de la manivelle 15a provoque une dite deuxième translation relative du caisson 3 par rapport à la cloche 4 qui est en butée contre la surface 11a jusqu'à ce que l'extrémité 10a du goujon arrive en contact avec la surface 11a après un déplacement d'une distance D₁.

A ce stade, la dite deuxième translation se combine à une dite première translation du goujon par rapport au caisson sur une distance de D₂.

L'outil de positionnement 14 permet entre autre de garantir une fiabilité du positionnement octogonale et une certaine répétabilité de positionnement du dispositif de soudage 2 et donc du goujon 10 par rapport à la surface 11a.

Un coffret de commande (non représenté) en surface permet de gérer les différents paramètres de soudage depuis la surface à savoir:
Lancement du cycle de soudage,
Contrôle des alimentations en gaz « axial » 30 et « radial » 40,
Contrôle du positionnement de la cloche en pré-accostage par un voyant relié au premier capteur 8 puis en accostage avec le deuxième capteur 7,
Contrôle de la tension à vide du générateur de soudage, et
Actionnement de l'arrêt d'urgence en cas de défaillance du matériel.

Le coffret de commande se branche entre le générateur de soudage et le dispositif de soudage.

Des paramètres de soudage à régler lors de la mise en œuvre du dispositif de soudage sont :
L'intensité de soudage (A) : paramètre à régler sur le générateur de soudage situé au poste de commande en surface,
Le temps de soudage (ms) : paramètre à régler sur le générateur de soudage situé sur le poste de commande en surface,
Le dépassement (D2) (mm) : paramètre à régler sur la cloche 4,
La levée de l'extrémité 10a du goujon dans le cadre du cycle de soudage (mm) : paramètre à régler sur le dispositif de motorisation 20 situé dans le caisson 3, et
La pression des gaz « axial » 30 et « radial » 40 (bar) : paramètres à régler sur le coffret de commande situé en surface.

Le déroulement d'un cycle de soudage avec le dispositif automatique de soudage 2 de goujon sous eau implique l'intervention d'un opérateur au niveau du poste de commande en surface ci-après :
L'opérateur donne l'ordre de pré-accostage du dispositif de soudage 2 :
Le scaphandrier avance le dispositif de soudage 2 avec la manivelle 15a jusqu'à ce que l'extrémité de la cloche 4 plus précisément l'extrémité de la couronne 4c soit au contact de la surface 11a de la pièce à souder 11 en veillant à ne pas compresser la cloche et envoie le signal pré-accostage réalisé une fois l'opération réalisée en fonction du signal du premier capteur 8.

L'opérateur actionne alors le déclenchement de la distribution de gaz «axial» et gaz «radial». Pendant une durée de 10 secondes, il y a alors évacuation de l'eau accumulé dans la première chambre interne 31 et la deuxième chambre interne 4b dans la cloche pour réaliser le séchage des extrémités 10a du goujon et de la zone 12 de la surface à souder à l'intérieur de la couronne 4c.

L'opérateur donne ensuite l'ordre d'accostage :
Le scaphandrier provoque une deuxième translation relative du caisson par rapport à la cloche celle-ci étant en butée sur la surface 11a jusqu'à ce que l'extrémité 10a du goujon soit compressé d'une distance D₂ contre la surface 11a ce qui est contrôlé par le deuxième capteur 7 et confirmé par le scaphandrier.

L'opérateur réalise les manipulations additionnelles suivantes :
Désactivation du sélecteur de la distribution de gaz « radial »,
Activation de la mise en marche du cycle de soudage.

Une fois l'opération de soudage terminée :
- L'opérateur désactive en arrêt le cycle de soudage et le gaz « axial »,
- L'opérateur donne l'ordre de désaccostage du dispositif de soudage au scaphandrier,
- le scaphandrier recule en translation inverse le caisson puis l'ensemble du caisson et de la cloche jusqu'à la désengager par rapport au goujon soudé sur la surface 11a et répond désaccostage à l'opérateur en surface une fois l'opération terminée.

Le type de soudure obtenu avec le dispositif de soudage selon l'invention est une soudure en pleine section comme montré sur la coupe macrographique de la figure 8.

Plus précisément, le procédé de soudage décrit ci-dessus comprend les étapes successives suivantes :
E1.1), on monte le dispositif de soudage 2 sur le châssis support 15,
E1.2), on fixe le support de fixation 16 sur la surface 11a de la porte de batardeau 11,
E1.3), on fixe le châssis support 15 sur le support de fixation 16,
E1.4), on actionne la manivelle 15a pour déplacer le dispositif de soudage 2 en translation jusqu'à une dite position de pré-accostage dans laquelle le caisson est encore à une distance maximale D₀ de la cloche et le dit deuxième ressort 6 est détendu, l'extrémité 10a du goujon étant à une distance maximale de retrait D₁ par rapport à la surface 11a, le dit premier ressort 23 étant détendu et la couronne 4c étant en contact en compression sur la surface 11a,
E2.1), on réalise une deuxième translation relative du caisson 3 par rapport à la cloche 4 et la surface 11a en actionnant la manivelle 15a jusqu'à ce que l'extrémité 10a du goujon arrive en contact contre la surface 11a sans être compressée toujours, le dit deuxième ressort 6 étant compressé mais le dit premier ressort 23 restant détendu,
E2.2), on est alors en position de pré-accostage, un signal du premier capteur 8 commande le déclenchement du flux de gaz « radial » 40 et de gaz « axial » 30,
E3.1), lorsque l'extrémité 10a et la zone à souder 12 de la surface 11a sont séchés, on réalise une translation relative du caisson par rapport à la cloche d'une distance de D₁ pour arriver à un stade intermédiaire dans lequel l'extrémité 10a du goujon est seulement en contact avec la surface du fait de la dite translation,
E3.2), puis, on poursuit la dite deuxième translation relative du caisson 3 par rapport à la cloche 4 pour que l'extrémité 10a du goujon soit compressée contre la surface 11 en réalisant concomitamment une dite première translation relative du support de goujon par rapport au caisson jusqu'à ce que la distance entre le caisson 3 et la cloche 4 soit maintenant minimale (D₃ correspondant à un déplacement de D₁ + D₂ du caisson par rapport à la distance initiale maximale D₀ pour atteindre une position dite d'accostage) à laquelle l'extrémité 10a du goujon est compressée contre la surface 11a correspondant à un recul relatif du goujon de D₂ par compression des premier ressort 23 et deuxième ressort 6.
E4.1), le deuxième capteur 7 envoie un signal qui permet de commander l'arrêt de flux de gaz « radial » 40 et on ne maintient que le premier flux « axial » 30 pour l'évacuation de l'eau et le maintien d'une atmosphère de gaz dans la cloche et au niveau de la zone à souder 12 de la surface 11a,
E4.2), on déclenche alors un cycle de soudage par dite première translation relative du goujon par rapport à la surface 11a jusqu'à l'obtention d'une avancée de l'extrémité de goujon 10a au sein du bain de fusion (13) dans la zone à souder à la surface 11a en extension maximale et détente du premier ressort 23,
E5.1), une fois l'encrage de l'extrémité 10a du goujon réalisée, on désolidarise le goujon du support de goujon 21,
E5.2), on réalise une deuxième translation relative inverse du caisson 3 par rapport à la cloche 4 toujours en butée contre la surface 11a en détendant le deuxième ressort 6 à l'aide de la manivelle 15a,
E5.3), une fois la distance maximale D₀ entre les caissons 3 et la cloche 4 atteinte, on poursuit la translation inverse de dégagement de l'ensemble du caisson 3 et de la cloche 4 par rapport à la surface 11a avec la dite manivelle 15a. A ce stade, on se trouve en dite position de désaccostage, la cloche 4 est dégagée par rapport à la surface 11a et les deux ressorts 6 et 23 sont à nouveau complètement détendus,
E5.4), on désolidarise le châssis support 15 par rapport au support de fixation 16,
E5.5), on désolidarise le support de fixation 16 de la porte de batardeau 11.

A titre illustratif, l'outil de soudage présente les dimensions suivantes :
- cloche 4 :
   - longueur : 62 mm,
   - α1' : 30°
   - diamètre interne maximal : 42.5mm
   - diamètre couronne 4c et orifice 4d :16mm,
   - longueur couronne 4c, e : 2mm,
- dispositif de soudage 2:
   - L1=392,5mm
   - L2 (diamètre caisson 3)=150 mm.

## Revendications

1. Outil de soudage (1) sous eau de l'extrémité (10a) de goujon (10) sur une surface (11a) de pièce métallique à souder (11) comprenant un dispositif de soudage de goujon (2) comprenant :
a) un caisson (3) formant une enceinte renfermant :
- un support de goujon (21) apte à supporter le goujon (10) et le maintenir dans une direction longitudinale axiale (XX') au sein d'une première chambre interne (31) du caisson, le dit support de goujon (21) étant monté apte à coulisser au sein de la première chambre interne (31) en première translation relative par rapport au caisson (3) en aller et retour dans la dite direction longitudinale (XX') lorsqu'on commande une opération de soudage dudit goujon (10), de préférence en coopérant avec un premier ressort (23),
- des moyens de déclenchement (20, 25) d'un arc électrique de soudage entre un goujon (10) supporté par ledit support de goujon (21) et la surface de la pièce à souder (11), et
- des moyens motorisés (22) aptes à déplacer le support de goujon (21) en dite première translation relative en aller et retour dans la dite direction longitudinale (XX') lorsqu'on commande une opération de soudage dudit goujon (10) contre la surface d'une pièce à souder (11), et
b) une cloche (4) montée co-axialement à l'avant dudit caisson (3), la dite cloche (4) comprenant un corps principal de cloche (4a) creux délimitant une deuxième chambre interne (4b) apte à recevoir le dit goujon (10) sur le dit support de goujon (21) et un gaz apte à chasser un volume d'eau limité pouvant être contenu dans la deuxième chambre interne (4b), c) au moins un premier circuit de distribution (30a) de gaz par lequel un premier flux (30) de gaz peut être envoyé dans la dite cloche pour chasser l'eau au niveau de la zone de surface de la pièce à souder pendant le soudage, de préférence un gaz inerte,
**caractérisé en ce que** le dit corps principal (4a) de cloche comprenant une paroi transversale avant (4e) comprenant un orifice centrale circulaire coaxial (4d) bordé par une couronne crénelée (4c) externe coaxiale apte à buter contre la surface (11a) de la pièce à souder (11), et **en ce que** l'outil de soudage (1) comprend :
(1) ladite cloche (4) montée apte à être déplacée en deuxième translation relative par rapport au dit caisson (3) co-axialement à l'avant dudit caisson entre :
(1a) une position de pré-accostage de l'outil de soudage (1) dans laquelle lorsque la dit couronne crénelée (4c) est en contact contre la surface (11a) de la pièce à souder (11), la cloche (4) étant le plus éloigné (d0) du caisson (3) et l'extrémité avant (10a) dudit goujon (10) supporté par le dit support de goujon (21) se trouvant en retrait vers l'arrière (d1) par rapport à l'extrémité avant de la dite couronne crénelée (4c), et
(1b) une position d'accostage de l'outil de soudage dans laquelle la cloche (4) est le plus proche (d3) du caisson (3), la dite couronne crénelée (4c) et l'extrémité avant (10a) dudit goujon supporté par le dit support de goujon se trouvant en butée contre ladite surface de la pièce à souder, et
(2) deux circuits de distribution du gaz avec :
(2a) un premier circuit (30a) par lequel un premier flux (30) de gaz peut être envoyé dans ladite première chambre interne (31), de préférence de l'avant (3b) du caisson, en direction du dit orifice central (4d) de ladite deuxième chambre interne (4b) de la dite cloche avec laquelle elle communique, ledit premier flux pouvant arriver au niveau du dit orifice central (4d) parallèlement ou selon une première inclinaison d'un angle α1 par rapport à la direction longitudinale axiale (XX') de façon à évacuer toute eau contenue dans lesdites première chambre interne (31) et deuxième chambre interne (4b) en dite position de pré-accostage et dite position d'accostage, et
(2b) un deuxième circuit (40-1, 40-2) par lequel un deuxième flux de gaz peut être envoyé en direction de l'extrémité avant (10a) dudit goujon en dite position initiale de pré-accostage de l'outil de soudage de façon à en chasser toute trace d'humidité, ledit deuxième flux (40) pouvant arriver au niveau de ladite extrémité avant (10a) du goujon radialement ou selon une deuxième inclinaison d'un angle α2 par rapport à la direction longitudinale axiale (XX') plus importante que l'angle α1 de la dite première inclinaison α1.

2. Outil de soudage selon la revendication 1, **caractérisé en ce que** la dite couronne crénelée (4c) présente un diamètre inférieur à celui de la paroi transversale avant (4e) de la cloche au-delà de laquelle ladite couronne s'étend (e) dans la dite direction longitudinale axiale (XX') lequel diamètre de la dite couronne est de préférence d'au moins 3 fois le diamètre dudit goujon et de pas plus de 1/3, de préférence pas plus de 1/10, du diamètre de la cloche au niveau de la dite paroi transversale avant (4e) et la longueur (e) de la couronne est pas plus 1/3, de préférence de pas plus de 1/5 du diamètre de ladite couronne.

3. Outil de soudage selon l'une des revendications 1 ou 2, **caractérisé en ce qu'**au moins un capteur (7, 8), de préférence apte à coopérer avec au moins une butée mécanique (7,5a), de préférence disposée sur un dit axe de guidage (6) en entretoise entre le caisson (3) et la cloche (4), permet de contrôler une distance minimale (d3) de la cloche (4) par rapport au caisson (3) en dite deuxième translation relative en dite position d'accostage de l'outil de soudage dans laquelle la cloche (4) est le plus proche du caisson, la dit couronne crénelée (4c) et l'extrémité avant (10a) dudit goujon supporté par le dit support de goujon (21) se trouvant en butée contre ladite surface de la pièce à souder (11).

4. Outil de soudage selon les revendications 1 à 3, **caractérisé en ce qu'**il comprend :
- un dit support de goujon (21) apte à coulisser au sein de la première chambre (31) en dite première translation relative en coopérant avec un dit premier ressort (23) tel que :
(a1) ledit premier ressort (23) est en position de détente lorsque le dit goujon (10) est en dite position de pré-accostage ou en position de désaccostage dans laquelle la dite cloche (4) n'est pas encore ou plus en contact avec la surface à souder (11), et
(b1) ledit premier ressort (23) est en position partiellement comprimée lorsque ledit goujon (10) est en dite position d'accostage en butée contre la dite surface de la pièce à souder, et
- un dit corps principal (4a) de la dite cloche qui est monté sur des axes de guidage (5) guidant ladite deuxième translation relative du caisson (3) par rapport à la cloche (4), les dits axes de guidage (5) étant solidaires de la partie avant (3b) du dit caisson délimitant la dite première chambre interne (31) et le dit corps principal (4a) de la cloche est apte à coopérer avec un deuxième ressort (6) lors d'une dite deuxième translation relative de sorte que :
(a2) le dit deuxième ressort (6) se trouve détendu en dite position de pré-accostage et dite position de désaccostage, et
(b2) le dit deuxième ressort (6) se trouve comprimé en dite position d'accostage du goujon (10) en butée contre la dite surface de la pièce à souder (11).

5. Outil de soudage selon les revendications 3 et 4, **caractérisé en ce qu'**un premier capteur (8) de préférence coopérant avec au moins une première butée mécanique (7), permet de contrôler une distance intermédiaire de la cloche (4) par rapport au caisson (3) en dite deuxième translation relative dans laquelle la cloche (4) est rapprochée du caisson correspondant à une compression partielle du dit deuxième ressort (6) la dite couronne crénelée (4c) et l'extrémité avant (10a) dudit goujon se trouvant en contact avec une dite surface (11a) de pièce à souder (11), ledit premier ressort (23) étant détendu.

6. Outil de soudage selon l'une des revendications 3 à 5, **caractérisé en ce qu'**un deuxième capteur (7), de préférence coopérant avec au moins une deuxième butée mécanique (5a), de préférence encore une deuxième butée mécanique (5a) disposée sur un dit axe de guidage (6) en entretoise entre le caisson (3) et la cloche (4), permet de contrôler :
- une distance minimale (d3) de la cloche (4) par rapport au caisson (3) en dite deuxième translation relative en dite position d'accostage de l'outil de soudage dans laquelle la cloche (4) est le plus proche du caisson correspondant à une compression maximale autorisée du dit deuxième ressort (6) la dite couronne crénelée (4c) se trouvant en contact avec une dite surface de pièce à souder (11), et
- l'extrémité avant (10a) dudit goujon supporté par ledit support de goujon (21) se trouvant en butée contre ladite surface de la pièce à souder (11), ledit premier ressort (23) étant en compression partielle en dite position d'accostage de sorte que lors du soudage l'extrémité avant (10a) du goujon s'étend en avant de ladite couronne (4c), au sein du bain de fusion du fait de la dite première translation.

7. Outil de soudage selon l'une des revendications 1 à 6, **caractérisé en ce qu'**il comprend un dispositif de positionnement (14) apte à coopérer avec le dit dispositif de soudage (2) et une surface de pièce à souder (11) pour :
- positionner ledit dispositif de soudage (2) avec son axe longitudinal (XX') perpendiculaire à ladite surface de pièce à souder, et
- effectuer une translation du dispositif de soudage par rapport à la surface à souder et une dite deuxième translation de façon contrôlée entre une dite position de pré-accostage et une dite position d'accostage.

8. Outil de soudage selon la revendication 7, **caractérisé en ce que** ledit un dispositif de positionnement (14) comprend :
- un châssis (15) apte supporter et guider en translation le dit dispositif de soudage (2) comprenant au moins un rail de guidage (15d) coopérant avec un élément de guidage complémentaire (15e) solidaire dudit caisson (3) pour permettre le coulissement du dit caisson dans une dite direction axiale longitudinale (XX') du dispositif de soudage, et
- un support de fixation (16) apte à être fixé avec des moyens de fixation (16d, 16e) sur une dite surface de la pièce à souder et apte à coopérer avec ledit châssis (15) dans la dite direction longitudinale (XX') de sorte que l'on peut réaliser :
- tout d'abord, un dit coulissement guidé du dispositif de soudage (1) sur le dit châssis (15) jusqu'à ce que la dite cloche (4) entre en contact avec ladite surface à souder (11), puis
- une dite deuxième translation relative en continuant le dit coulissement longitudinal du caisson (3) sur le dit châssis (15) avec la dite cloche (4) en butée sur la dite surface à souder.

9. Outil de soudage selon l'une des revendications 1 à 8, **caractérisé en ce que** ledit corps principal de la cloche renferme dans sa masse des canaux de distribution de gaz (40-1, 40-2) s'étendant dans des directions radiales perpendiculaires à la dite direction longitudinale axiale ou de préférence des directions inclinées (Y1Y1', Y2Y2') par rapport aux dites directions radiales, les dits canaux (40-1, 40-2) formant des orifices latéraux (40d1, 40d2) débouchant au niveau de la paroi latérale délimitant ladite deuxième chambre interne, lesdits canaux (40-1, 40-2) et dit orifices latéraux (40d1, 40d2) étant disposés symétriquement par rapport audit axe longitudinale (XX') du dispositif de soudage, et dit orifices latéraux (40d1, 40d2) étant disposés latéralement en vis-à-vis de l'extrémité du dit goujon (10) lorsque celui-ci est sur ledit support de goujon et en retrait (d1) par rapport à l'extrémité avant de la dite couronne (4c) en dite position de pré-accostage, de préférence lesdits axes (Y1Y1', Y2Y2') des dits canaux étant inclinés de façon à converger au niveau de l'extrémité du dit goujon et de préférence encore de façon à ce que le dit deuxième flux de gaz sortant de chacun desdits canaux recouvre l'espace (d1) entre l'extrémité avant du dit goujon et la surface à souder en contact avec la dite cloche et circonscrite par la dite couronne (4c).

10. Outil de soudage selon l'une des revendications 1 à 9, **caractérisé en ce que** ledit premier circuit (30a) par lequel un premier flux (30) de gaz peut être envoyé dans ladite première chambre interne (31) à l'avant du caisson et en direction du dit orifice central (4d) de ladite deuxième chambre interne (4b) de la dite cloche avec laquelle elle communique, ledit premier flux pouvant arriver au niveau du dit orifice central (4d) parallèlement ou selon une première inclinaison (α1) par rapport à la direction longitudinale axial.

11. Procédé de mise en oeuvre d'un outil de soudage selon l'une des revendications 1 à 10, **caractérisé en ce qu'**on réalise les étapes suivantes :
E1) on positionne le dispositif de soudage (2) avec la dite couronne (4c) en contact contre la surface de la pièce à souder (11), l'axe longitudinal (XX') dudit goujon supporté par le dit support de goujon (21) étant perpendiculaire à la surface de la pièce à souder, l'extrémité avant dudit goujon (10) se trouvant en retrait vers l'arrière (d1) par rapport à la surface (11a) de la pièce à souder (11) en position de pré-accostage,
E2) en dite position de pré-accostage, on envoie un dit deuxième flux (40) de gaz dans ledit deuxième circuit (40-1,40-2) de façon à chasser toute trace d'humidité au niveau de ladite extrémité avant (10a) du goujon avant de passer en dite position d'accostage et concomitamment, de préférence, un dit premier flux (30) de gaz dans ledit premier circuit (30a) de façon à évacuer l'eau contenu dans les dite première chambre interne (31) et dite deuxième chambre interne(4b) et dite couronne (4c),
E3) on réalise une dite deuxième translation relative du caisson (3) par rapport à la dite cloche (4) pour passer d'une dite position de pré-accostage à une dite position d'accostage dans laquelle l'extrémité avant dudit goujon se trouvant compressé en butée contre ladite surface de la pièce à souder, et
E4) on interrompt d'envoyer ledit deuxième flux (40) de gaz et on maintient ledit premier flux (30) de gaz, et on réalise ledit soudage en réalisant une dite première translation dudit support de goujon (21) par rapport au caisson à l'aide de dits des moyens motorisés (22) et en déclenchant un arc électrique de soudage (20) entre l'extrémité avant du goujon (10) et une surface (11a) d'une pièce à souder (11), et
E5) après soudage, on désolidarise le goujon du support de goujon et on écarte le dispositif de soudage de la dite surface sur laquelle ledit goujon est soudé en réalisant une dite deuxième translation en sens inverse à l'issue de laquelle la cloche (4) se retrouve plus éloigné (d0) du caisson (3) et le dit support de goujon (21) se trouvant en retrait vers l'arrière par rapport à l'extrémité avant de la dite couronne crénelée dans une position de désaccostage.

12. Procédé selon la revendication 11, **caractérisé en ce que** :
- à l'étape E1), on fixe le dispositif de soudage (2) sur un dispositif de positionnement (14) lui-même fixé sur la dite surface de la pièce à souder (11), ledit dispositif de soudage (2) étant ainsi positionné avec ledit axe longitudinal (XX') perpendiculaire à ladite surface de pièce à souder (11) et on effectue une translation du dispositif de soudage (2) dans son ensemble par rapport à la surface de la pièce à souder (11) à l'aide du dit dispositif de positionnement (14), et
- à l'étape E3), on effectue une dite deuxième translation du caisson (3) par rapport à ladite cloche (4) de façon contrôlée entre une dite position de pré-accostage et une dite position d'accostage à l'aide du dit dispositif de positionnement (14), et
- à l'étape E5), on effectue une dite deuxième translation inverse du caisson (3) par rapport à ladite cloche (4) de façon contrôlée entre une dite position d'accostage et une dite position de désaccostage à l'aide du dit dispositif de positionnement (14), puis on dégage l'ensemble dudit dispositif de soudage (2) par rapport à la surface de la pièce à souder sur laquelle ledit goujon est ancré par soudage par translation inverse à l'aide du dit dispositif de positionnement (14).

13. Procédé selon l'une des revendications 11 ou 12, **caractérisé en ce qu'**à l'étape E4), avant le dit soudage, on contrôle avec au moins un capteur (7, 8) que de préférence apte à coopérer avec au moins une butée mécanique (7, 5a) que la dite couronne crénelée (4c) et l'extrémité avant (10a) dudit goujon supporté par le dit support de goujon (21) se trouvent en butée contre ladite surface de la pièce à souder (11).

14. Procédé selon l'une des revendications 11 à 13, **caractérisé en ce que** :
- à l'étape E3), ladite deuxième translation relative du caisson (3) par rapport à la cloche (4) est guidée par des axes de guidage (5) sur lesquels ledit corps principal (4a) de la dite cloche est monté, les dits axes de guidage (5) étant solidaires de la partie avant (3b) du dit caisson délimitant la dite première chambre interne (31), et le dit corps principal (4a) de la cloche coopère avec un deuxième ressort (6) lors d'une dite deuxième translation relative de sorte que :
(a2) le dit deuxième ressort (6) se trouve détendu en dite position de pré-accostage, et
(b2) le dit deuxième ressort (6) se trouve comprimé en dite position d'accostage du goujon (10) en butée contre la dite surface de la pièce à souder (11), et
- à l'étape E4), lors du soudage, ledit support de goujon (21) coulisse au sein de la première chambre (31) en dite première translation relative en coopérant avec un dit premier ressort (23) tel que :
(a1) ledit premier ressort (23) est en position de détente lorsque le dit goujon (10) est en dite position de pré-accostage, et
(b1) ledit premier ressort (23) est en position partiellement comprimée lorsque ledit goujon (10) est en dite position d'accostage en butée contre ladite surface de la pièce à souder (11).

15. Procédé selon l'une des revendications 13 ou 14, **caractérisé en ce qu'**à l'étape E3), avant le dit soudage, on contrôle successivement :
(c1) avec un premier capteur de préférence coopérant avec au moins une première butée mécanique, que l'on se trouve dans une position avec une distance intermédiaire de la cloche (4) par rapport au caisson (3) en dite deuxième translation relative, la cloche (4) étant rapprochée du caisson correspondant à une compression partielle du dit deuxième ressort (6), la dite couronne crénelée (4c) et l'extrémité avant (10a) dudit goujon se trouvant en simple contact avec une dite surface (11a) de pièce à souder (11), ledit premier ressort (23) étant détendu, puis
(c2) avec un deuxième capteur (7), de préférence coopérant avec au moins une deuxième butée mécanique (5a), de préférence encore une deuxième butée mécanique (5a) disposée sur un dit axe de guidage (6) en entretoise entre le caisson (3) et la cloche (4), l'arrêt du deuxième flux de gaz et le déclenchement du soudage lorsqu'on se trouve dans une dite position d'accostage avec :
- une distance minimale (d3) de la cloche (4) par rapport au caisson (3) en dite deuxième translation relative en dite position d'accostage de l'outil de soudage dans laquelle la cloche (4) est le plus proche du caisson correspondant à une compression maximale autorisée du dit deuxième ressort (6) la dite couronne crénelée (4c) se trouvant en contact avec une dite surface de pièce à souder (11), et
- l'extrémité avant (10a) dudit goujon en compressée butée contre ladite surface de la pièce à souder (11), ledit premier ressort (23) étant en compression partielle en dite position d'accostage de sorte que lors du soudage l'extrémité avant (10a) du goujon s'étend en avant de ladite couronne (4c), au sein du bain de fusion du fait de la dite première translation.

16. Procédé selon l'une des revendications 11 à 15, **caractérisé en ce qu'**on réalise le soudage d'un goujon (10) sur une surface d'une pièce à souder dans une atmosphère contaminée par des rayonnements nucléaires, de préférence une surface (11a) d'une porte de batardeau au sein d'une piscine de centrale nucléaire.

## Patentansprüche

1. Werkzeug (1) zum Unterwasserschweißen des Endes (10a) eines Bolzens (10) an eine Oberfläche (11a) eines zu schweißenden Metallteils (11), mit einer Bolzenschweißvorrichtung (2), umfassend:
a) ein Gehäuse (3), das eine Umhüllung bildet und enthält:
- einen Bolzenträger (21), der dazu ausgelegt ist, den Bolzen (10) zu tragen und ihn in einer axialen Längsrichtung (XX') in einer ersten Innenkammer (31) des Gehäuses zu halten, wobei der Bolzenträger (21) in der ersten Innenkammer (31) in Bezug auf das Gehäuse (3) in einer Vorwärts- und Rückwärtsrichtung in der Längsrichtung (XX') in einer ersten relativen Translationsbewegung verschiebbar montiert ist, wenn ein Schweißvorgang des Bolzens (10) gesteuert wird, vorzugsweise durch Zusammenwirken mit einer ersten Feder (23),
- Mittel (20, 25) zum Auslösen eines Schweißlichtbogens zwischen einem von dem Bolzenträger (21) getragenen Bolzen (10) und der Oberfläche des zu schweißenden Teils (11) und
- motorisierte Mittel (22), die dazu ausgelegt sind, den Bolzenträger (21) in der genannten ersten relativen Translationsbewegung in Vorwärts- und Rückwärtsrichtung in der genannten Längsrichtung (XX') zu verschieben, wenn ein Schweißvorgang des Bolzens (10) gegen die Oberfläche eines zu schweißenden Teils (11) befohlen wird, und
b) eine Glocke (4), die koaxial an der Vorderseite des Gehäuses (3) angebracht ist, wobei die Glocke (4) einen hohlen Hauptglockenkörper (4a) aufweist, der eine zweite Innenkammer (4b) begrenzt, die geeignet ist, den Bolzen (10) auf dem Bolzenträger (21) aufzunehmen, und ein Gas, das geeignet ist, ein begrenztes Wasservolumen auszustoßen, das in der zweiten Innenkammer (4b) enthalten sein kann,
c) mindestens einen ersten Gasverteilungskreislauf (30a), durch den ein erster Strom (30) von Gas, vorzugsweise ein Inertgas, in die Glocke eingespeist werden kann, um Wasser auf Höhe der Oberfläche des zu schweißenden Teils während des Schweißens auszuspülen,
**dadurch gekennzeichnet, dass** der Glockenhauptkörper (4a) eine vordere Querwand (4e) aufweist, die eine koaxiale kreisförmige Mittelöffnung (4d) aufweist, die von einem koaxialen äußeren zinnenbewehrten Ring (4c) begrenzt wird, der gegen die Oberfläche (11a) des zu schweißenden Teils (11) anstoßen kann, und
dadurch, dass das Schweißwerkzeug (1) umfasst:
(1) die Glocke (4), die so montiert ist, dass sie in einer zweiten relativen Translationsbewegung in Bezug auf das Gehäuse (3) koaxial an der Vorderseite des Gehäuses verschiebbar ist zwischen:
(1a) einer Vor-Andockposition des Schweißwerkzeugs (1), in der, wenn der zinnenbewehrte Ring (4c) in Kontakt mit der Oberfläche (11a) des zu schweißenden Teils (11) ist, wobei die Glocke (4) am weitesten (d0) von dem Gehäuse (3) entfernt ist und das vordere Ende (10a) des von dem Bolzenträger (21) getragenen Bolzens (10) in Bezug auf das vordere Ende des zinnenbewehrten Rings (4c) nach hinten (d1) zurückgesetzt ist, und
(1b) einer Andockposition des Schweißwerkzeugs, in der die Glocke (4) dem Gehäuse (3) am nächsten (d3) ist, wobei der zinnenbewehrte Ring (4c) und das vordere Ende (10a) des von der Bolzenhalterung getragenen Bolzens an der Oberfläche des zu schweißenden Teils anliegen, und
(2) zwei Gasverteilungskreisläufe mit:
(2a) einem ersten Kreislauf (30a), durch den ein erster Strom (30) von Gas in die erste innere Kammer (31) geleitet werden kann, vorzugsweise von der Vorderseite (3b) des Gehäuses in Richtung der zentralen Öffnung (4d) der zweiten inneren Kammer (4b) der Glocke, mit der sie in Verbindung steht, wobei die erste Strom an der zentralen Öffnung (4d) parallel zu der axialen Längsrichtung (XX') oder mit einer ersten Neigung eines Winkels α1 in Bezug auf die axiale Längsrichtung (XX') ankommen kann, um das in der ersten Innenkammer (31) und der zweiten Innenkammer (4b) in der Vor-Andockposition und der Andockposition enthaltene Wasser abzuführen, und
(2b) einem zweiten Kreislauf (40-1, 40-2), durch den ein zweiter Gasstrom zum vorderen Ende (10a) des Bolzens in der Anfangsposition vor dem Andocken des Schweißwerkzeugs geleitet werden kann, um alle Spuren von Feuchtigkeit aus diesem zu verdrängen, wobei der zweite Strom (40) auf Höhe des vorderen Endes (10a) des Bolzens radial oder mit einer zweiten Neigung unter einem Winkel α2 in Bezug auf die axiale Längsrichtung (XX') ankommen kann, der größer als der Winkel α1 der ersten Neigung α1 ist.

2. Schweißwerkzeug nach Anspruch 1, **dadurch gekennzeichnet, dass** der zinnenbewehrte Ring (4c) einen Durchmesser aufweist, der kleiner ist als der der vorderen Querwand (4e) der Glocke, über die sich der Ring in der axialen Längsrichtung (XX') hinaus erstreckt (e), wobei der Durchmesser des Rings vorzugsweise mindestens das Dreifache des Durchmessers des Bolzens und höchstens 1/3 beträgt, vorzugsweise nicht mehr als 1/10 des Durchmessers der Glocke an der vorderen Querwand (4e) und die Länge (e) des Rings nicht mehr als 1/3, vorzugsweise nicht mehr als 1/5 des Durchmessers des Rings beträgt.

3. Schweißwerkzeug nach einem der Ansprüche 1 oder 2, **dadurch gekennzeichnet, dass** mindestens ein Sensor (7, 8), der vorzugsweise dazu ausgelegt ist, mit mindestens einem mechanischen Anschlag (7, 5a) zusammenzuwirken, der vorzugsweise auf einer Führungsachse (6) als Abstandshalter zwischen dem Gehäuse (3) und der Glocke (4) angeordnet ist, es ermöglicht, einen Mindestabstand (d3) der Glocke (4) in Bezug auf das Gehäuse (3) bei der zweiten relativen Translationsbewegung des Schweißwerkzeugs in die Andockposition, in der die Glocke (4) dem Gehäuse am nächsten ist, zu prüfen, wobei der zinnenbewehrte Ring (4c) und das vordere Ende (10a) des Bolzens, der von dem Bolzenträger (21) getragen wird, an der Oberfläche des zu schweißenden Teils (11) anliegen.

4. Schweißwerkzeug nach den Ansprüchen 1 bis 3, **dadurch gekennzeichnet, dass** es umfasst:
- einen besagten Bolzenträger (21), der dazu ausgelegt ist, in der ersten Kammer (31) bei der ersten relativen Translationsbewegung zu gleiten, indem er mit einer besagten ersten Feder (23) zusammenwirkt, so dass:
(a1) die erste Feder (23) sich in einer entspannten Position befindet, wenn sich der Bolzen (10) in der Vor-Andockposition oder in einer Andocklöseposition befindet, in der die Glocke (4) noch nicht oder nicht mehr in Kontakt mit der zu schweißenden Oberfläche (11a) ist, und
(b1) die erste Feder (23) sich in einer teilweise zusammengedrückten Position befindet, wenn sich der Bolzen (10) in der Andockposition befindet und gegen die Oberfläche des zu schweißenden Teils stößt, und
- einen besagten Hauptkörper (4a) der Glocke, der auf Führungsachsen (5) montiert ist, die die zweite relative Translationsbewegung des Gehäuses (3) in Bezug auf die Glocke (4) führen, wobei die Führungsachsen (5) fest mit dem vorderen Teil (3b) des Gehäuses verbunden sind, der die erste innere Kammer (31) begrenzt, und wobei der Hauptkörper (4a) der Glocke dazu ausgelegt ist, mit einer zweiten Feder (6) während der zweiten relativen Translationsbewegung zusammenzuwirken, so dass:
(a2) die zweite Feder (6) in der Vor-Andockposition und der Andocklöseposition entspannt ist, und
(b2) die zweite Feder (6) in der Andockposition des Bolzens (10) in Anlage an die Oberfläche des zu schweißenden Teils (11) zusammengedrückt ist.

5. Schweißwerkzeug nach den Ansprüchen 3 und 4, **dadurch gekennzeichnet, dass** ein erster Sensor (8), der vorzugsweise mit mindestens einem ersten mechanischen Anschlag (7) zusammenwirkt, es ermöglicht, einen Zwischenabstand der Glocke (4) in Bezug auf das Gehäuse (3) bei der zweiten relativen Translationsbewegung zu prüfen, bei der die Glocke (4) näher an das Gehäuse gebracht wird, was einer teilweisen Kompression der zweiten Feder (6) entspricht, wobei der zinnenbewehrte Ring (4c) und das vordere Ende (10a) des Bolzens in Kontakt mit der Oberfläche (11a) des zu schweißenden Teils (11) stehen und die erste Feder (23) entspannt ist.

6. Schweißwerkzeug nach einem der Ansprüche 3 bis 5, **dadurch gekennzeichnet, dass** ein zweiter Sensor (7), der vorzugsweise mit mindestens einem zweiten mechanischen Anschlag (5a), vorzugsweise noch einem zweiten mechanischen Anschlag (5a), zusammenwirkt, der als Abstandshalter zwischen dem Gehäuse (3) und der Glocke (4) auf einer der genannten Führungsachsen (6) angeordnet ist, es ermöglicht, zu prüfen:
- einen Mindestabstand (d3) der Glocke (4) in Bezug auf das Gehäuse (3) bei der zweiten relativen Translationsbewegung des Schweißwerkzeugs in die Andockposition, in der die Glocke (4) dem Gehäuse am nächsten ist, was einer maximal zulässigen Kompression der zweiten Feder (6) entspricht, wobei der zinnenbewehrte Ring (4c) in Kontakt mit der Oberfläche des zu schweißenden Teils (11) steht, und
- wobei das vordere Ende (10a) des Bolzens, der von dem Bolzenträger (21) getragen wird, gegen die Oberfläche des zu schweißenden Teils (11) anstößt, wobei die erste Feder (23) in der Andockposition teilweise zusammengedrückt ist, so dass sich während des Schweißens das vordere Ende (10a) des Bolzens vor dem Ring (4c) innerhalb des Schmelzbades als Ergebnis der ersten Translationsbewegung erstreckt.

7. Schweißwerkzeug nach einem der Ansprüche 1 bis 6, **dadurch gekennzeichnet, dass** es eine Positioniervorrichtung (14) umfasst, die dazu ausgelegt ist, mit der Schweißvorrichtung (2) und einer Oberfläche des zu schweißenden Teils (11) zusammenzuwirken, um:
- die Schweißvorrichtung (2) mit ihrer Längsachse (XX') senkrecht zu der Oberfläche des zu schweißenden Teils zu positionieren, und
- eine Translationsbewegung der Schweißvorrichtung in Bezug auf die zu schweißende Oberfläche und eine besagte zweite Translationsbewegung in einer kontrollierten Weise zwischen einer besagten Vor-Andockposition und einer besagten Andockposition durchzuführen.

8. Schweißwerkzeug nach Anspruch 7, **dadurch gekennzeichnet, dass** besagte eine Positioniervorrichtung (14) umfasst:
- einen Rahmen (15), der dazu ausgelegt ist, die Schweißvorrichtung (2) zu tragen und translatorisch zu führen, umfassend mindestens eine Führungsschiene (15d), die mit einem komplementären Führungselement (15e) zusammenwirkt, das fest mit dem Gehäuse (3) verbunden ist, um das Gleiten des Gehäuses in der Längsachsenrichtung (XX') der Schweißvorrichtung zu ermöglichen, und
- einen Befestigungsträger (16), der dazu ausgelegt ist, mit Befestigungsmitteln (16d, 16e) an der genannten Oberfläche des zu schweißenden Teils befestigt zu werden, und der dazu ausgelegt ist, mit dem Rahmen (15) in der genannten Längsrichtung (XX') zusammenwirken, um zu realisieren:
- zunächst ein geführtes Gleiten der Schweißvorrichtung (2) auf dem Rahmen (15), bis die Glocke (4) mit der zu schweißenden Oberfläche (11) in Kontakt kommt, dann
- eine besagte zweite relative Translationsbewegung durch Fortsetzen besagter Längsbewegung des Gehäuses (3) auf dem Rahmen (15), wobei die Glocke (4) an der zu schweißenden Oberfläche anliegt.

9. Schweißwerkzeug nach einem der Ansprüche 1 bis 8, **dadurch gekennzeichnet, dass** der Glockenhauptkörper in seiner Masse Gasverteilungskanäle (40-1, 40-2) enthält, die sich in radialen Richtungen senkrecht zu der axialen Längsrichtung oder vorzugsweise in geneigten Richtungen (Y1Y1', Y2Y2') in Bezug auf die genannten radialen Richtungen erstrecken, wobei die genannten Kanäle (40-1, 40-2) seitliche Öffnungen (40d1, 40d2) bilden, die in Höhe der Seitenwand münden, die die genannte zweite innere Kammer begrenzt, wobei die genannten Kanäle (40-1, 40-2) und die genannten seitlichen Öffnungen (40d1, 40d2) symmetrisch in Bezug auf die genannte Längsachse (XX') der Schweißvorrichtung angeordnet sind, und wobei die seitlichen Öffnungen (40d1, 40d2) seitlich gegenüber dem Ende des Bolzens (10) angeordnet sind, wenn sich dieser auf der Bolzenhalterung befindet, und von dem vorderen Ende des Rings (4c) in der Vor-Andockposition zurückgesetzt (d1) sind, wobei vorzugsweise die Achsen (Y1 Y1'), Y2Y2') der Kanäle so geneigt sind, dass sie am Ende des Bolzens konvergieren und vorzugsweise ferner so, dass der aus jedem der Kanäle austretende zweite Gasstrom den Raum (d1) zwischen dem vorderen Ende des Bolzens und der zu schweißenden Oberfläche, die in Kontakt mit der Glocke steht und von dem Ring (4c) begrenzt wird, abdeckt.

10. Schweißwerkzeug nach einem der Ansprüche 1 bis 9, **dadurch gekennzeichnet, dass** der erste Kreislauf (30a), durch den ein erster Gasstrom (30) in die erste Innenkammer (31) an der Vorderseite des Gehäuses und zu der zentralen Öffnung (4d) der zweiten Innenkammer (4b) der Glocke, mit der sie in Verbindung steht, geleitet werden kann, wobei der erste Strom parallel oder mit einer ersten Neigung (α1) in Bezug auf die axiale Längsrichtung zu der zentralen Öffnung (4d) gelangen kann.

11. Verfahren zur Verwendung eines Schweißwerkzeugs nach einem der Ansprüche 1 bis 10, **dadurch gekennzeichnet, dass** die folgenden Schritte durchgeführt werden:
E1) die Schweißvorrichtung (2) wird mit dem genannten Ring (4c) in Kontakt gegen die Oberfläche des zu schweißenden Teils (11) positioniert, wobei die Längsachse (XX') des genannten Bolzens, der von dem genannten Bolzenträger (21) getragen wird, senkrecht zu der Oberfläche des zu schweißenden Teils ist, wobei das vordere Ende des genannten Bolzens (10) in Bezug auf die Oberfläche (11a) des zu schweißenden Teils (11) in der Vor-Andockposition nach hinten (d1) zurückgesetzt ist,
E2) in der Vor-Andockposition wird ein zweiter Gasstrom (40) in den zweiten Kreislauf (40-1, 40-2) geleitet, um alle Spuren von Feuchtigkeit am vorderen Ende (10a) des Bolzens vor dem Gehen in die Andockposition auszustoßen, und vorzugsweise wird gleichzeitig ein erster Gasstrom (30) in den ersten Kreislauf (30a) geleitet, um das in der ersten inneren Kammer (31) und der zweiten inneren Kammer (4b) und dem Ring (4c) enthaltene Wasser auszutreiben,
E3) eine besagte zweite relative Translationsbewegung des Gehäuses (3) in Bezug auf die Glocke (4) wird durchgeführt, um von einer besagten Vor-Andockposition in eine besagte Andockposition überzugehen, in der das vordere Ende des Bolzens in Anlage gegen die Oberfläche des zu schweißenden Teils zusammengedrückt wird, und
E4) das Senden des zweiten Gasstroms (40) wird unterbrochen und der erste Gasstrom (30) wird aufrechterhalten und das Schweißen durch Ausführen einer ersten besagten Translationsbewegung des Bolzenträgers (21) in Bezug auf das Gehäuse mittels der motorisierten Mittel (22) und durch Auslösen eines elektrischen Schweißlichtbogens (20) zwischen dem vorderen Ende des Bolzens (10) und einer Oberfläche (11a) eines zu schweißenden Teils (11) durchgeführt wird, und
E5) nach dem Schweißen der Bolzen vom Bolzenträger abgetrennt und die Schweißvorrichtung von der besagten Oberfläche, auf der die besagte Bolzen geschweißt wird, entfernt wird, indem eine zweite besagte Translationsbewegung in entgegengesetzter Richtung durchgeführt wird, an deren Ende die Glocke (4) vom Gehäuse (3) weiter entfernt (d0) ist und der besagte Bolzenträger (21) gegenüber dem vorderen Ende des besagten zinnenbewehrten Rings in einer Andocklöseposition nach hinten zurückgesetzt ist.

12. Verfahren nach Anspruch 11, **dadurch gekennzeichnet, dass** :
- in Schritt E1) die Schweißvorrichtung (2) auf einer Positioniervorrichtung (14) befestigt wird, die ihrerseits auf der genannten Oberfläche des zu schweißenden Teils (11) befestigt ist, wobei die genannte Schweißvorrichtung (2) so positioniert wird, dass die genannte Längsachse (XX') senkrecht zu der genannten Oberfläche des zu schweißenden Teils (11) steht, und eine Translationsbewegung der gesamten Schweißvorrichtung (2) in Bezug auf die Oberfläche des zu schweißenden Teils (11) mit Hilfe der genannten Positioniervorrichtung (14) erfolgt, und
- in Schritt E3) die genannte zweite Translationsbewegung des Gehäuses (3) in Bezug auf die Glocke (4) in kontrollierter Weise zwischen einer genannten Vor-Andockposition und einer genannten Andockposition mit Hilfe der Positioniervorrichtung (14) durchgeführt wird und
- in Schritt E5) eine besagte zweite umgekehrte Translationsbewegung des Gehäuses (3) in Bezug auf die Glocke (4) in kontrollierter Weise zwischen einer Andockposition und einer Andocklöseposition mit Hilfe der Positioniervorrichtung (14) durchgeführt wird, dann die gesamte Schweißvorrichtung (2) in Bezug auf die Oberfläche des zu schweißenden Teils, auf der der Bolzen durch Schweißen verankert ist, mit umgekehrter Translationsbewegung mit Hilfe der Positioniervorrichtung (14) freigegeben wird.

13. Verfahren nach einem der Ansprüche 11 oder 12, **dadurch gekennzeichnet, dass** in Schritt E4) vor dem Schweißen mit mindestens einem Sensor (7, 8), der vorzugsweise mit mindestens einem mechanischen Anschlag (7, 5a) zusammenwirken kann, überprüft wird, dass der zinnenbewehrte Ring (4c) und das vordere Ende (10a) des von dem Bolzenträger (21) getragenen Bolzens an der Oberfläche des zu schweißenden Teils (11) anliegen.

14. Verfahren nach einem der Ansprüche 11 bis 13, **dadurch gekennzeichnet, dass**:
- in Schritt E3) die besagte zweite relative Translationsbewegung des Gehäuses (3) in Bezug auf die Glocke (4) durch Führungsachsen (5) geführt wird, auf denen der Hauptkörper (4a) der Glocke montiert ist, wobei die Führungsachsen (5) fest mit dem vorderen Teil (3b) des Gehäuses verbunden sind, der die erste innere Kammer (31) begrenzt, und der Hauptkörper (4a) der Glocke bei einer besagten zweiten relativen Translationsbewegung mit einer zweiten Feder (6) zusammenwirkt, so dass:
(a2) die zweite Feder (6) bis zu der Vor-Andockposition entspannt ist und
(b2) die zweite Feder (6) in der Andockposition des Bolzens (10) zusammengedrückt wird, bis sie an der Oberfläche des zu schweißenden Teils (11) anliegt, und
- in Schritt E4) während des Schweißens der Bolzenträger (21) in der ersten Kammer (31) in der ersten relativen Translationsbewegung gleitet, indem er mit der ersten Feder (23) zusammenwirkt, so dass:
(a1) die erste Feder (23) sich in einer entspannten Position befindet, wenn sich der Bolzen (10) in der Vor-Andockposition befindet, und
(b1) die erste Feder (23) sich in einer teilweise zusammengedrückten Position befindet, wenn sich der Bolzen (10) in der Andockposition befindet und an die Oberfläche des zu schweißenden Teils (11) anstößt.

15. Verfahren nach einem der Ansprüche 13 oder 14, **dadurch gekennzeichnet, dass** in Schritt E3) vor dem besagten Schweißen nacheinander geprüft wird:
(c1) mit einem ersten Sensor, der vorzugsweise mit mindestens einem ersten mechanischen Anschlag zusammenwirkt, ob man sich bei der genannten zweiten relativen Translationsbewegung in einer Position mit einem Zwischenabstand von der Glocke (4) in Bezug auf das Gehäuse (3) befindet, wobei die Glocke (4) näher an das Gehäuse gebracht wird, was einer teilweisen Kompression der zweiten Feder (6) entspricht, wobei der zinnenbewehrte Ring (4c) und das vordere Ende (10a) des Bolzens in einfachem Kontakt mit der Oberfläche (11a) des zu schweißenden Teils (11) stehen, wobei die erste Feder (23) entspannt ist, dann
(c2) mit einem zweiten Sensor (7), der vorzugsweise mit mindestens einem zweiten mechanischen Anschlag (5a), vorzugsweise einem zweiten mechanischen Anschlag (5a), zusammenwirkt, der auf der Führungsachse (6) als Abstandshalter zwischen dem Gehäuse (3) und der Glocke (4) angeordnet ist, der zweite Gasstrom stoppt und das Schweißen startet, wenn man sich in der Andockposition befindet, ob:
- ein Mindestabstand (d3) der Glocke (4) in Bezug auf den Mantel (3) bei der zweiten relativen Translationsbewegung des Schweißwerkzeugs in die Andockposition, in der die Glocke (4) dem Mantel am nächsten ist, der einer maximal zulässigen Kompression der zweiten Feder (6) entspricht, wobei der zinnenbewehrte Ring (4c) in Kontakt mit der Oberfläche des zu schweißenden Teils (11) steht, und ob
- das vordere Ende (10a) des Bolzens in komprimierter Anlage gegen die Oberfläche des zu schweißenden Teils (11) steht, wobei die erste Feder (23) in der Andockposition teilweise komprimiert ist, so dass sich während des Schweißens das vordere Ende (10a) des Bolzens vor dem zinnenbewehrten Ring (4c) innerhalb des Schmelzbades als Ergebnis der ersten Translationsbewegung erstreckt.

16. Verfahren nach einem der Ansprüche 11 bis 15, **dadurch gekennzeichnet, dass** ein Bolzen (10) an eine Oberfläche eines zu schweißenden Teils in einer durch radioaktive Strahlung kontaminierten Atmosphäre geschweißt wird, vorzugsweise an eine Oberfläche (11a) einer Kofferdammtür innerhalb eines Kernkraftwerkbeckens.

## Claims

1. A tool (1) for underwater welding of the end (10a) of a stud bolt (10) to a surface (11a) of a metal part to be welded (11), comprising a stud bolt welding device (2) comprising:
a) a casing (3) forming an enclosure containing:
- a stud bolt support (21) able to support the stud bolt (10) and hold it in an axial longitudinal direction (XX') within a first inner chamber (31) of the casing, said stud bolt support (21) being mounted able to slide within the first inner chamber (31) in a first relative back-and-forth translation with respect to the casing (3) in said longitudinal direction (XX') when a welding operation on said stud bolt (10) is ordered, preferably while cooperating with a first spring (23),
- means of triggering (20, 25) an electric welding arc between a stud bolt (10) supported by said stud bolt support (21) and the surface of the part to be welded (11), and
- motorized means (22) able to move the stud bolt support (21) in said first relative back-and-forth translation in said longitudinal direction (XX') when a welding operation of said stud bolt (10) against the surface of a part to be welded (11) is ordered, and
b) a hood (4) mounted coaxially at the front of said casing (3), said hood (4) comprising a hollow main hood body (4a) delimiting a second inner chamber (4b) able to receive said stud bolt (10) on said stud bolt support (21) and a gas able to drive off a limited volume of water which can be contained in the second inner chamber (4b),
c) at least one first gas distribution circuit (30a) by which a first gas flow (30) can be sent into said hood to drive off the water at the surface zone of the part to be welded during welding, preferably an inert gas,
**characterized in that** said main hood body (4a) comprising a front transverse wall (4e) comprising a coaxial circular central opening (4d) bordered by an outer coaxial crenelated ring (4c) able to abut against the surface (11a) of the part to be welded (11), and **in that** the welding tool (1) comprises:
(1) said hood (4) mounted able to be moved in a second relative translation with respect to said casing (3) coaxially at the front of said casing between:
(1a) a premating position of the welding tool (1) in which, when said crenelated ring (4c) is in contact against the surface (11a) of the part to be welded (11), the hood (4) being farthest way (d0) from the casing (3) and the front end (10a) of said stud bolt (10) supported by said stud bolt support (21) located recessed rearward (d1) with respect to the front end of said crenelated ring (4c), and
(1b) a mating position of the welding tool in which the hood (4) is closest (d3) to the casing (3), said crenelated ring (4c) and the front end (10a) of said stud bolt supported by said stud bolt support being located in abutment against said surface of the part to be welded, and
(2) two gas distribution circuits with:
(2a) a first circuit (30a) by which a first gas flow (30) can be sent into said first inner chamber (31), preferably from the front (3b) of the casing, in the direction of said central opening (4d) of said second inner chamber (4b) of said hood with which it communicates, said first flow being able to arrive at said central opening (4d) parallel or at a first inclination at an angle α₁ with respect to the axial longitudinal direction (XX'), so as to remove all water contained in said first inner chamber (31) and second inner chamber (4b) in said premating position and said mating position, and
(2b) a second circuit (40-1, 40-2) by which a second gas flow can be sent in the direction of the front end (10a) of said stud bolt in said initial premating condition of the welding tool so as to drive away from it any trace of humidity, said second flow (40) being able to arrive at said front end (10a) of the stud bolt radially or at a second inclination at an angle α₂2 with respect to the axial longitudinal direction (XX'), greater than the angle α₁ of said first inclination α₁.

2. The welding tool according to claim 1, **characterized in that** said crenelated ring (4c) has a diameter smaller than that of the front transverse wall (4e) of the hood beyond which said ring extends (e) in said axial longitudinal direction (XX'), which diameter of said ring is preferably at least 3 times the diameter of said stud bolt and not more than 1/3, preferably not more than 1/10, the diameter of the hood at said front transverse wall (4e) and the length (e) of the ring is not more than 1/3, preferably not more than 1/5 the diameter of said ring.

3. A welding tool according to one of claims 1 or 2, **characterized in that** at least one sensor (7, 8), preferably able to cooperate with at least one mechanical stop (7,5a), preferably disposed on a said guide pin (6) as a spacer between the casing (3) and the hood (4), allows verifying a minimum distance (d3) of the hood (4) with respect to the casing (3) in the said second relative translation in said mating position of the welding tool in which the hood (4) is closest to the casing, said crenelated ring (4c) and the front end (10a) of said stud bolt supported by said stud bolt support (21) located in abutment against said surface of the part to be welded (11).

4. The welding tool according to claims 1 to 3, **characterized in that** it comprises:
- a said stud bolt support (21) able to slide within the first chamber (31) in said first relative translation while cooperating with one said first spring (23) such that:
(a1) said first spring (23) is in the expanded position when said stud bolt (10) is in said premating position or in the demating position in which said hood (4) is not yet or no longer in contact with the surface to be welded (11), and
(b1) said first spring (23) is in a partially compressed position when said stud bolt (10) is in said mating position in abutment against said surface of the part to be welded, and
- a said principal body (4a) of said hood which is mounted on the guide pin (5) guiding said second relative translation of the casing (3) with respect to the hood (4), said guide pins (5) being integral with the front portion (3b) of said casing delimiting said first internal chamber (31) and said principal body (4a) of the good being able to cooperate with a second spring (6) during a second relative translation so that:
(a2) said second spring (6) is expanded in said premating position and said demating condition, and
(b2) said second spring (6) is compressed in said mating position of the stud bolt (10) in abutment against said surface of the part to be welded (11).

5. The welding tool according to claims 3 and 4, **characterized in that** a first sensor (8), preferably cooperating with a first mechanical stop (7), allows verifying an intermediate distance of the hood (4) with respect to the casing (3) is said second relative translation in which the hood (4) is brought closer to the casing corresponding to a partial compression of said second spring (6) said crenelated ring (4c) and the front end (10a) of said stud bolt being located in contact with a said surface (11a) of the part to be welded (11), said first spring (23) being expanded.

6. The welding tool according to one of claims 3 to 5, **characterized in that** a second sensor (7), preferably cooperating with at least one second mechanical stop (5a), preferably yet another second mechanical stop (5a) disposed on a said guide pin (6) as a spacer between the casing (3) and the hood (4), allows verifying:
- a minimum distance (d3) of the hood (4) with respect to the casing (3) in said second relative translation in said mating position of the welding tool in which the hood (4) is closest to the casing corresponding to a maximum allowed compression of said second spring (6) said crenelated ring (4c) being located in contact with a said surface of the part to be welded (11), and
- the front end (10a) of said stud bolt supported by said stud bolt support (21) being located against said surface of the part to be welded (11), said first spring (23) being in partial compression in said mating position so that when during welding the front end (10a) of the stud bolt extends forward of said ring (4c), within the molten puddle due to said first translation.

7. The welding tool according to one of claims 1 to 6, **characterized in that** it comprises a positioning device (14) able to cooperate with said welding device (2) and a surface of the part to be welded (11) for:
- positioning said welding device (2) with its horizontal axis (XX') perpendicular to said surface of the part to be welded, and
- carry out a translation of the welding device with respect to the surface to be welded and a said second verified translation between a said premating position and a said mating position.

8. The welding tool according to claim 7, **characterized in that** said positioning device (14) comprises:
- a frame (15) able to support and guide said welding device (2) in translation comprising at least one guide rail (15d) cooperating with a complementary guide element (15e) integral with said casing (3) to allow the sliding of said casing in a said axial longitudinal direction (XX') of the welding device, and
- a fastening support (16) able to be fastened with fastening means (16d, 16e) to a said surface of the part to be welded and able to cooperate with said frame (15) in said longitudinal direction (XX') so that it is possible to accomplish:
- first of all, a said guided sliding of the welding device (1) on said frame (15) until said hood (4) enters into contact with said surface to be welded (11), then
- a said second relative translation continuing said longitudinal sliding of the casing (3) on said frame (15) with said hood (4) in abutment on said surface to be welded.

9. The welding tool according to one of claims 1 to 8, **characterized in that** said principal body of the hood encloses within its mass gas distribution channels (40-1, 40-2) extending in radial directions perpendicular to said axial longitudinal direction or preferably directions (Y1Y1', Y2Y2') inclined with respect to said radial direction, said channels (40-1, 40-2) forming lateral openings (40d1, 40d2) leading to the lateral wall delimiting said second inner chamber, said channels (40-1, 40-2) and said lateral openings (40d1, 40d2) being disposed symmetrically with respect to said longitudinal axis (XX') of the welding device, and said lateral openings (40d1, 40d2) being disposed laterally facing the end of said stud bolt (10) when it is on said stud bold support and recessed (d1) with respect to the front end of said ring (4c) in said premating position, preferably said axes (Y1Y1', Y2Y2') of said channels being inclined so as to converge at the end of said stud bolt and more preferably so that said second gas flow leaving each of said channels covers the space (d1) between the front end of said stud bolt and the surface to be welded in contact with said hood and circumscribed by said ring (4c).

10. The welding tool according to one of claims 1 to 9, **characterized in that** said first circuit (30a) through which a first gas flow (30) can be sent into said first inner chamber (31) at the front of the casing and in the direction of said central opening (4d) of said second inner chamber (4b) of said hood with which it communicates, said first flow being able to arrive at said central opening (4d) parallel or at a first inclination (α₁) with respect to the axial longitudinal direction.

11. An implementation method of a welding tool according to one of claims 1 to 10, **characterized in that** the following steps are performed:
E1) the welding device (2) is positioned with said ring (4c) in contact against the surface of the part to be welded (11), the longitudinal axis (XX') of said stud bolt supported by said stud bolt support (21) being perpendicular to the surface of the part to be welded, the front end of said stud bolt (10) being located recessed rearward (d1) with respect to the surface (11a) of the part to be welded (11) in the premating position,
E2) in said premating position, one said second gas flow (40) is sent into said second circuit (40-1,40-2) so as to drive off any trace of humidity at said front end (10a) of the stud bolt before passing into said mating position and concomitantly, preferably, one said first gas flow (30) into said first circuit (30a) so as to remove the water contained in said first inner chamber (31) and said second inner chamber (4b) and said ring (4c),
E3) a said second relative translation of the casing (3) relative to said hood (4) is accomplished, to pass from a said premating position to a said mating position in which the front end of said stud bolt is located compressed in abutment against said surface of the part to be welded, and
E4) sending said second gas flow (40) is interrupted and said first gas flow (30) is maintained, and said welding is accomplished by performing one said first translation of said stud bolt support (21) with respect to the casing by means of said motorized means (22) and by triggering an electric welding arc (20) between the front end of the stud bolt (10) and a surface (11a) of a part to be welded (11), and
E5) after welding, the stud bolt is detached from the stud bolt support and the welding device is separated from said surface on which said stud bolt is welded by performing a said second translation in the reverse direction, at the end of which the hood (4) is located farther away (d0) from the casing (3) and said stud bolt support (21) is located recessed rearward with respect to the front end of said crenelated ring in a demating position.

12. The method according to claim 11, **characterized in that**:
- in step E1), the welding device (2) is fastened to a positioning device (14), itself fastened to said surface of the part to be welded (11), said welding device (2) thus being positioned with said longitudinal axis (XX') perpendicular to said surface of the part to be welded (11) and a translation of the welding device (2) is carried out in its assembly with respect to the surface of the part to be welded (11) by means of said positioning device (14), and
- in step E3), a said second translation of the casing (3) is carried out relative to said hood (4) in a verified manner between a said premating position and a said mating position of said positioning device (14), and
- in step E5), a said second reverse translation of the casing (3) is carried out with respect to said hood (4) in a verified manner between a said mating position and a said demating position by means of said positioning device (14), then the assembly is disengaged from said welding device (2) with respect to the surface of the part to be welded on which said stud bolt is anchored by welding, by reverse translation by means of said positioning device (14).

13. The method according to one of claims 11 or 12, **characterized in that** in step E4), before said welding, it is verified with at least one sensor (7, 8) which is preferably able to cooperate with at least one mechanical stop (7, 5a) that said crenelated ring (4c) and the front end (10a) of said stud bolt supported by said stud bolt support (21) are located in abutment against said surface of the part to be welded (11).

14. The method according to one of claims 11 to 13, **characterized in that**:
- in step E3), said second relative translation of the casing (3) with respect to the hood (4) is guided by guide pins (5) on which said principal body (4a) of said hood is mounted, said guide pins (5) being integral with the front portion (3b) of said casing delimiting said first inner chamber (31), and said principal body (4a) of the hood cooperates with a second spring (6) during a said second relative translation so that:
(a2) said second spring (6) is expanded in said premating position, and
(b2) said second spring (6) is compressed in said mating position of the stud bolt (10) in abutment against said surface of the part to be welded (11), and
- in step E4), during welding, said stud bolt support (21) slides within the first chamber (31) in said first relative translation while cooperating with a said first spring (23) such that:
(a1) said first spring (23) is in its expanded position when said stud bolt (10) is in said premating position, and
(b1) said first spring (23) is in a partly compressed position when said stud bolt (10) is in said mating position in abutment against said surface of the part to be welded (11).

15. The method according to one of claims 13 or 14, **characterized in that** in step E3), before said welding, the following are verified in succession:
(c1) with a first sensor, preferably cooperating with at least one first mechanical stop, the fact of being located in a position with an intermediate distance of the hood (4) with respect to the casing (3) in said second relative translation, the hood (4) being brought closer to the casing corresponding to a partial compression of said second spring (6), said crenelated ring (4c) and the front end (10a) of said stud bolt being located in simple contact with a said surface (11a) of the part to be welded (11), said first spring (23) being expanded, then
(c2) with a second sensor (7), preferably cooperating with at least one second mechanical stop (5a), preferably yet another second mechanical stop (5a) disposed on a said guide pin (6) as a spacer between the casing (3) and the hood (4), the stoppage of the second gas flow and the triggering of the welding when located in a said mating position with:
- a minimum distance (d3) of the hood (4) with respect to the casing (3) in said second relative translation in said mating position of the welding tool in which the hood (4) is closest to the casing corresponding to a maximum allowed compression of said second spring (6), said crenelated ring (4c) being located in contact with said surface of the part to be welded (11), and
- the front end (10a) of said stud bolt in compression, abutted against said surface of the part to be welded (11), said first spring (23) being in partial compression in said mating position so that during welding the front end (10a) of the stud bolt extends in front of said ring (4c), within the molten puddle due to said first translation.

16. The method according to one of claims 11 to 15, **characterized in that** the welding of a stud bolt (10) on a surface of a part to be welded is accomplished in an atmosphere contaminated by nuclear radiation, preferably a surface (11a) of a cofferdam door within a nuclear power plant pool.
